# EUROPEAN PATENT APPLICATION

(11) **EP 4 501 437 A1**
(43) Date of publication of application: **05.02.2025**
(21) Application number: 22935649.8
(22) Date of filing: 16.11.2022
(51) Int. Cl.: B01D 53/62, B01D 53/04, B01D 53/26, B01D 53/40, B01D 53/82, C01B 32/50

(54) **PRE-TREATMENT METHOD, CARBON DIOXIDE COLLECTION METHOD, AND DEVICE FOR EXECUTING THESE METHODS**

(30) Priority: 29.03.2022 JP 2022053562
(71) Applicant: Mitsubishi Heavy Industries, Ltd., Tokyo 100-8332 (JP)
(72) Inventor: TOMONAGA Nariyuki, Tokyo 100-8332 (JP); ITO Yoshiaki, Tokyo 100-8332 (JP); ANKEI Naoki, Tokyo 100-8332 (JP)
(74) Representative: Studio Torta S.p.A.
(86) International application number: PCT/JP2022/042487
(87) International publication number: WO 2023/188520

(57) **Abstract**

A pre-treatment device includes a dehumidification tower capable of removing moisture from an exhaust gas. The dehumidification tower includes a moisture adsorbent capable of adsorbing moisture, an acid gas adsorbent capable of adsorbing an acid gas, a dehumidification container filled with the moisture adsorbent and the acid gas adsorbent. The moisture adsorbent is filled on the side of a second port from which an exhaust gas is able to flow rather than the acid gas adsorbent in the dehumidification container. The moisture adsorbent is an adsorbent containing alumina. The acid gas adsorbent is an adsorbent containing silica and not containing alumina or an adsorbent containing silica and alumina and having a (Si/Al) molar ratio of more than 2.5.

## Description

### TECHNICAL FIELD

The present disclosure relates to a pre-treatment method, a carbon dioxide collection method, and a device for executing these methods.

Priority is claimed on Japanese Patent Application No. 2022-053562, filed March 29, 2022, the content of which is incorporated herein by reference.

### BACKGROUND ART

From the viewpoint of protecting the global environment, facilities that collect carbon dioxide contained in an exhaust gas are being considered in order to reduce carbon dioxide emissions.

As the facilities that collect carbon dioxide from the exhaust gas, for example, a facility disclosed in Patent Document 1 below is known. This facility includes a pre-treatment device and a carbon dioxide collection device. The pre-treatment device includes a dehumidification tower capable of removing moisture from an exhaust gas. The dehumidification tower is filled with synthetic zeolite as a moisture adsorbent capable of adsorbing moisture. The carbon dioxide collection device is filled with synthetic zeolite as a carbon dioxide adsorbent capable of adsorbing carbon dioxide.

Synthetic zeolite can adsorb the moisture and carbon dioxide. Therefore, when an exhaust gas containing moisture and carbon dioxide is passed through synthetic zeolite, the synthetic zeolite adsorbs the moisture and carbon dioxide in the exhaust gas, and hence carbon dioxide adsorption efficiency decreases.

Therefore, in the facility described in Patent Document 1, the carbon dioxide adsorbent of the carbon dioxide collection device adsorbs carbon dioxide in a pretreated gas from which moisture has been removed after the pre-treatment device removes the moisture in the exhaust gas.

### Citation List

### Patent Document

Patent Document 1; Japanese Unexamined Patent Application, First Publication No. H01-108106

### SUMMARY OF INVENTION

### Technical Problem

In order to collect carbon dioxide from the pretreated gas exhausted from the pre-treatment device, the dew point of this pretreated gas is preferably as low as possible. In other words, it is preferable that the moisture concentration in the pretreated gas is as low as possible.

Further, it is preferable that the moisture adsorbent in the pre-treatment device maintains its moisture adsorption performance for a long period of time.

Therefore, an object of the present disclosure is to provide a technology capable of lowering a dew point of a gas having passed through a moisture adsorbent while maintaining the moisture adsorption performance of the moisture adsorbent for a long period of time.

### Solution to Problem

A pre-treatment device according to an aspect of the present disclosure for achieving the above object is a pre-treatment device capable of removing moisture from an exhaust gas containing moisture, carbon dioxide, and an acid gas before treatment in a carbon dioxide collection device, including: a dehumidification tower capable of removing moisture from the exhaust gas; and a blower capable of sending the exhaust gas into the dehumidification tower. The dehumidification tower includes a moisture adsorbent capable of adsorbing moisture, an acid gas adsorbent capable of adsorbing an acid gas, and a dehumidification container filled with the moisture adsorbent and the acid gas adsorbent. The dehumidification container includes a first port into which the exhaust gas from the blower is able to flow and a second port from which a gas having passed through the moisture adsorbent and the acid gas adsorbent is able to flow out as a pretreated gas. The acid gas adsorbent is filled on the side of the first port in the dehumidification container, and the moisture adsorbent is filled on the side of the second port rather than the acid gas adsorbent in the dehumidification container. The moisture adsorbent is an adsorbent containing alumina. The acid gas adsorbent is an adsorbent containing silica and not containing alumina or an adsorbent containing silica and alumina and having a (Si/Al) molar ratio of more than 2.5.

Representative moisture adsorbents include zeolite and silica gel. Silica gel is resistant to acid gas. Therefore, even if silica gel is used as an adsorbent for adsorbing moisture from exhaust gas containing moisture and acid gas, the dehumidification performance of the silica gel is not significantly reduced. On the other hand, when an adsorbent containing alumina such as zeolite is used as an adsorbent for adsorbing moisture from the exhaust gas containing moisture and acid gas, the alumina binds with the acid gas, and the dehumidification performance of the adsorbent decreases. That is, an adsorbent containing alumina has lower resistance to acid gas than silica gel. As described above, from the viewpoint of resistance to acid gas, an adsorbent having a high silica content relative to the alumina content is preferred.

On the other hand, adsorbents containing alumina such as zeolite can lower the dew point of the exhaust gas compared to silica gel. In other words, the adsorbent containing alumina can reduce the moisture concentration in exhaust gas compared to silica gel. As described above, from the viewpoint of lowering the dew point of the gas, an adsorbent having a relatively high alumina content relative to the silica content is preferable.

In this aspect, from the viewpoint of lowering the dew point of the gas sent to the carbon dioxide collection device, the adsorbent containing alumina is used as the moisture adsorbent.

However, since the moisture adsorbent containing alumina has low resistance to acid gas, in this embodiment, the exhaust gas is passed through the acid gas adsorbent to remove most of the acid gas in the exhaust gas, and then the gas is passed through the moisture adsorbent. Therefore, the acid gas adsorbent plays a role of protecting the moisture adsorbent used in this aspect by adsorbing acid gas.

As described above, in this aspect, since the adsorbent containing alumina is used as the moisture adsorbent, it is possible to lower the dew point of the gas sent to the carbon dioxide collection device. As described above, the adsorbent containing alumina has low resistance to acid gas. However, in this aspect, since the exhaust gas is passed through the acid gas adsorbent to remove most of the acid gas in the exhaust gas and this gas is passed through the moisture adsorbent as described above, the moisture adsorption performance of the moisture adsorbent can be maintained for a long period of time.

A carbon dioxide collection facility according to an aspect of the present disclosure for achieving the above object includes the pre-treatment device according to the above aspect and the carbon dioxide collection device. The carbon dioxide collection device includes a carbon dioxide adsorption tower into which the pretreated gas is able to flow and which is filled with a carbon dioxide adsorbent capable of adsorbing carbon dioxide in the pretreated gas and a suction machine which vacuum-suctions the inside of the carbon dioxide adsorption tower.

In the pre-treatment device of this aspect, the dew point of the gas sent to the carbon dioxide collection device can be lowered. In other words, the moisture concentration in the gas can be reduced. Therefore, carbon dioxide can be efficiently adsorbed by the carbon dioxide adsorbent in the carbon dioxide adsorption tower. Carbon dioxide adsorbed by the carbon dioxide adsorbent is collected by vacuum-suctioning the inside of the carbon dioxide adsorption tower by the suction machine.

A pre-treatment method according to an aspect of the present disclosure for achieving the above object is a pre-treatment method of removing moisture from an exhaust gas containing moisture, carbon dioxide, and an acid gas before carbon dioxide collection treatment, executing: an acid gas removal step of removing an acid gas in the exhaust gas by passing the exhaust gas through an acid gas adsorbent capable of adsorbing an acid gas; and a dehumidification step of passing an acid gas removal gas that is the exhaust gas subjected to the acid gas removal step through a moisture adsorbent capable of adsorbing moisture to remove moisture in the acid gas removal gas and executing the carbon dioxide collection treatment on a pretreated gas that is the acid gas removal gas from which the moisture has been removed. The acid gas adsorbent is an adsorbent containing silica and not containing alumina or an adsorbent containing silica and alumina and having a (Si/Al) molar ratio of more than 2.5. The moisture adsorbent is an adsorbent containing alumina.

In this aspect, as in the pre-treatment device of the above aspect, the dew point of the gas subjected to the carbon dioxide collection treatment can be lowered, and the moisture adsorption performance of the moisture adsorbent used in the pre-treatment can be maintained for a long period of time.

A carbon dioxide collection method according to an aspect of the present disclosure for achieving the above object executes the pre-treatment method of the aspect and executes the carbon dioxide collection treatment. The carbon dioxide collection treatment includes a carbon dioxide adsorption step of passing the pretreated gas through a carbon dioxide adsorbent capable of adsorbing carbon dioxide so that the carbon dioxide in the pretreated gas is adsorbed by the carbon dioxide adsorbent and a carbon dioxide release step of releasing the carbon dioxide from the carbon dioxide adsorbent to collect the carbon dioxide.

In this aspect, the dew point of the gas subjected to the carbon dioxide collection treatment can be lowered. In other words, the moisture concentration in the gas can be reduced. Therefore, carbon dioxide can be efficiently adsorbed by the carbon dioxide adsorbent used in the carbon dioxide adsorption step. Carbon dioxide adsorbed by the carbon dioxide adsorbent is collected by executing the carbon dioxide release step. Advantageous Effects of Invention

According to an aspect of the present disclosure, it is possible to lower the dew point of the gas having passed through the moisture adsorbent while maintaining the moisture adsorption performance of the moisture adsorbent for a long period of time.

### BRIEF DESCRIPTION OF DRAWINGS

[FIG. 1] is a (first) system diagram of a carbon dioxide collection facility according to a first embodiment of the present disclosure.
[FIG. 2] is a (second) system diagram of the carbon dioxide collection facility according to the first embodiment of the present disclosure.
[FIG. 3] is a flowchart showing an operation of the carbon dioxide collection facility according to the first embodiment of the present disclosure.
[FIG. 4] is a system diagram of a carbon dioxide collection facility according to a second embodiment of the present disclosure.
[FIG. 5] is a system diagram of a carbon dioxide collection facility according to a third embodiment of the present disclosure.
[FIG. 6] is a flowchart showing an operation of the carbon dioxide collection facility according to the third embodiment of the present disclosure.
[FIG. 7] is a system diagram of a carbon dioxide collection facility according to a fourth embodiment of the present disclosure.
[FIG. 8] is a flowchart showing an operation of the carbon dioxide collection facility according to the fourth embodiment of the present disclosure.

### DESCRIPTION OF EMBODIMENTS

Various embodiments and modified examples of a carbon dioxide collection facility according to the present disclosure will be described below with reference to the drawings.

### "First embodiment"

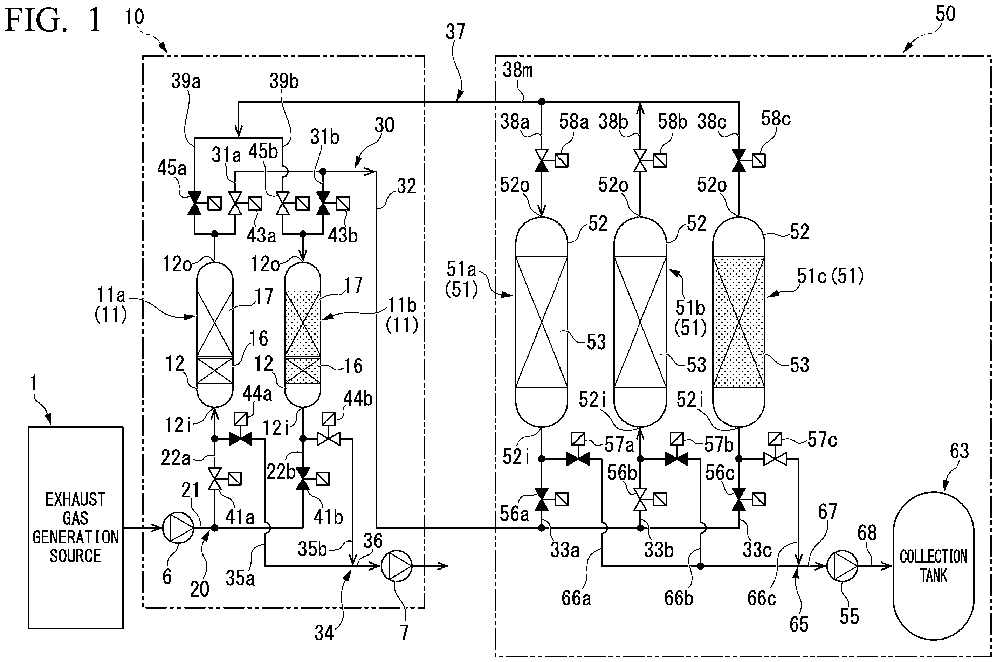

A first embodiment of the carbon dioxide collection facility will be described with reference to FIGS. 1 to 3.

As shown in FIG. 1, the carbon dioxide collection facility of this embodiment is a facility that collects carbon dioxide from an exhaust gas of an exhaust gas generation source 1. The exhaust gas generation source 1 may be, for example, an incinerator, a coal-fired boiler, an LNG-fired boiler, a blast furnace or converter in a steelworks, a kiln in a cement factory, a gas turbine, and the like. The exhaust gas from the exhaust gas generation source 1 contains nitrogen, oxygen, carbon dioxide, water, and acid gas. Acid gases include HCl, SOx, and NOx. The types of acid gas contained in exhaust gas vary depending on the type of exhaust gas generation source.

This carbon dioxide collection facility includes a pre-treatment device 10 and a carbon dioxide collection device 50. The pre-treatment device 10 is a device for removing components from the exhaust gas that inhibit the carbon dioxide collection in the carbon dioxide collection device 50. The carbon dioxide collection device 50 is a device that mainly collects carbon dioxide from the exhaust gas of the pre-treatment device 10.

The pre-treatment device 10 includes two dehumidification towers 11. Each of the two dehumidification towers 11 includes a dehumidification container 12 and an acid gas adsorbent 16 and a moisture adsorbent 17 filled in the dehumidification container 12. The acid gas adsorbent 16 is an adsorbent capable of adsorbing acid gas such as HCl, SOx, and NOx. Further, the moisture adsorbent 17 is an adsorbent capable of adsorbing moisture. Each of the dehumidification containers 12 of the two dehumidification towers includes a first port 12i and a second port 12o. The first port 12i is formed on one side of the dehumidification container 12 with respect to the moisture adsorbent 17 and the acid gas adsorbent 16, and the second port 12o is formed on the other side of the dehumidification container 12 with respect to the moisture adsorbent 17 and the acid gas adsorbent 16. The acid gas adsorbent 16 is filled on the side of the first port 12i in the dehumidification container 12, and the moisture adsorbent 17 is filled on the side of the second port 12o rather than the acid gas adsorbent 16 in the dehumidification container 12. Hereinafter, one dehumidification tower 11 of the two dehumidification towers 11 will be referred to as a first dehumidification tower 11a, and the remaining dehumidification tower 11 will be referred to as a second dehumidification tower 11b.

The carbon dioxide collection device 50 includes three carbon dioxide adsorption towers 51. Each of the three carbon dioxide adsorption towers 51 includes a container 52 and a carbon dioxide adsorbent 53 filled in the container 52. Each of the containers 52 of the three carbon dioxide adsorption towers 51 includes a first port 52i and a second port 52o. The first port 52i is formed on one side of the container 52 with respect to the carbon dioxide adsorbent 53, and the second port 52o is formed on the other side of the container 52 with respect to the carbon dioxide adsorbent 53. Hereinafter, one carbon dioxide adsorption tower 51 of three carbon dioxide adsorption towers 51 will be referred to as a first carbon dioxide adsorption tower 51a, the other carbon dioxide adsorption tower 51 will be referred to as a second carbon dioxide adsorption tower 51b, and the remaining carbon dioxide adsorption tower 51 will be referred to as a third carbon dioxide adsorption tower 51c.

The pre-treatment device 10 includes a blower 6, a dehumidification vacuum pump 7, an exhaust gas line 20, a pretreated gas line 30, a moisture-rich gas line 34, an off-gas line 37, a first exhaust gas valve 41a, a second exhaust gas valve 41b, a dehumidification-side first pretreated gas valve 43a, a dehumidification-side second pretreated gas valve 43b, a first moisture-rich gas valve 44a, a second moisture-rich gas valve 44b, a dehumidification-side first off-gas valve 45a, and a dehumidification-side second off-gas valve 45b in addition to the first dehumidification tower 11a and the second dehumidification tower 11b described above.

The exhaust gas line 20 includes a main exhaust gas line 21, a first exhaust gas line 22a, and a second exhaust gas line 22b. One end of the main exhaust gas line 21 is connected to the exhaust gas generation source 1. One end of the first exhaust gas line 22a and one end of the second exhaust gas line 22b are connected to the other end of the main exhaust gas line 21. Thus, the first exhaust gas line 22a and the second exhaust gas line 22b are lines branched from the main exhaust gas line 21. The main exhaust gas line 21 is provided with the blower 6. The other end of the first exhaust gas line 22a is connected to the first port 12i of the first dehumidification tower 11a, and the other end of the second exhaust gas line 22b is connected to the first port 12i of the second dehumidification tower 11b. The first exhaust gas line 22a is provided with the first exhaust gas valve 41a. The second exhaust gas line 22b is provided with the second exhaust gas valve 41b.

The pretreated gas line 30 includes a dehumidification-side first pretreated gas line 31a, a dehumidification-side second pretreated gas line 31b, a main pretreated gas line 32, a collection-side first pretreated gas line 33a, a collection-side second pretreated gas line 33b, and a collection-side third pretreated gas line 33c. One end of the dehumidification-side first pretreated gas line 31a is connected to the second port 12o of the first dehumidification tower 11a, and one end of the dehumidification-side second pretreated gas line 31b is connected to the second port 12o of the second dehumidification tower 11b. The dehumidification-side first pretreated gas line 31a is provided with the dehumidification-side first pretreated gas valve 43a. The dehumidification-side second pretreated gas line 31b is provided with the dehumidification-side second pretreated gas valve 43b. One end of the main pretreated gas line 32 is connected to the other end of the dehumidification-side first pretreated gas line 31a and the other end of the dehumidification-side second pretreated gas line 31b. One end of the collection-side first pretreated gas line 33a, one end of the collection-side second pretreated gas line 33b, and one end of the collection-side third pretreated gas line 33c are connected to the other end of the main pretreated gas line 32. Thus, the collection-side first pretreated gas line 33a, the collection-side second pretreated gas line 33b, and the collection-side third pretreated gas line 33c are lines branched from the main pretreated gas line 32. The other end of the collection-side first pretreated gas line 33a is connected to the first port 52i of the first carbon dioxide adsorption tower 51a. The other end of the collection-side second pretreated gas line 33b is connected to the first port 52i of the second carbon dioxide adsorption tower 51b. The other end of the collection-side third pretreated gas line 33c is connected to the first port 52i of the third carbon dioxide adsorption tower 51c.

The moisture-rich gas line 34 includes a first moisture-rich gas line 35a, a second moisture-rich gas line 35b, and a main moisture-rich gas line 36. One end of the first moisture-rich gas line 35a is connected to a position on the side of the first dehumidification tower 11a rather than the first exhaust gas valve 41a in the first exhaust gas line 22a. One end of the second moisture-rich gas line 35b is connected to a position on the side of the second dehumidification tower 11b rather than the second exhaust gas valve 41b in the second exhaust gas line 22b. The first moisture-rich gas line 35a is provided with the first moisture-rich gas valve 44a, and the second moisture-rich gas line 35b is provided with the second moisture-rich gas valve 44b. One end of the main moisture-rich gas line 36 is connected to the other end of the first moisture-rich gas line 35a and the other end of the second moisture-rich gas line 35b. A suction port of the dehumidification vacuum pump 7 is connected to the other end of the main moisture-rich gas line 36.

The off-gas line 37 includes a collection-side first off-gas line 38a, a collection-side second off-gas line 38b, a collection-side third off-gas line 38c, a main off-gas line 38m, a dehumidification-side first off-gas line 39a, and a dehumidification-side second off-gas line 39b. One end of the collection-side first off-gas line 38a is connected to the second port 52o of the first carbon dioxide adsorption tower 51a. One end of the collection-side second off-gas line 38b is connected to the second port 52o of the second carbon dioxide adsorption tower 51b. One end of the collection-side third off-gas line 38c is connected to the second port 52o of the third carbon dioxide adsorption tower 51c. The other end of the collection-side first off-gas line 38a, the other end of the collection-side second off-gas line 38b, and the other end of the collection-side third off-gas line 38c are connected to a one end side portion of the main off-gas line 38m. One end of the dehumidification-side first off-gas line 39a and one end of the dehumidification-side second off-gas line 39b are connected to the other end of the main off-gas line 38m. The other end of the dehumidification-side first off-gas line 39a is connected to the second port 12o of the first dehumidification tower 11a. The other end of the dehumidification-side second off-gas line 39b is connected to the second port 12o of the second dehumidification tower 11b. The dehumidification-side first off-gas line 39a is provided with the dehumidification-side first off-gas valve 45a. The dehumidification-side second off-gas line 39b is provided with the dehumidification-side second off-gas valve 45b.

The carbon dioxide collection device 50 includes the blower 6, the pretreated gas line 30, a suction machine 55, a collection-side first preheated gas valve 56a, a collection-side second preheated gas valve 56b, a collection-side third preheated gas valve 56c, a first suction valve 57a, a second suction valve 57b, a third suction valve 57c, a collection-side first off-gas valve 58a, a collection-side second off-gas valve 58b, a collection-side third off-gas valve 58c, a collection tank 63, a suction line 65, the off-gas line 37, and a discharge line 68 in addition to the first carbon dioxide adsorption tower 51a, the second carbon dioxide adsorption tower 51b, and the third carbon dioxide adsorption tower 51c described above.

Among the components of the carbon dioxide collection device 50, the blower 6, the pretreated gas line 30, and the off-gas line 37 are components of the carbon dioxide collection device 50 and are also components of the pre-treatment device 10.

The collection-side first preheated gas valve 56a is provided in the collection-side first pretreated gas line 33a described above. The collection-side second preheated gas valve 56b is provided in the collection-side second pretreated gas line 33b described above. The collection-side third preheated gas valve 56c is provided in the collection-side third pretreated gas line 33c described above. The collection-side first off-gas valve 58a is provided in the collection-side first off-gas line 38a described above. The collection-side second off-gas valve 58b is provided in the collection-side second off-gas line 38b described above. The collection-side third off-gas valve 58c is provided in the collection-side third off-gas line 38c described above.

The suction line 65 includes a first suction line 66a, a second suction line 66b, a third suction line 66c, and a main suction line 67. One end of the first suction line 66a is connected to a position on the side of the first carbon dioxide adsorption tower 51a rather than the collection-side first preheated gas valve 56a in the collection-side first pretreated gas line 33a. The first suction line 66a is provided with the first suction valve 57a. One end of the second suction line 66b is connected to a position on the side of the second carbon dioxide adsorption tower 51b rather than the collection-side second preheated gas valve 56b in the collection-side second pretreated gas line 33b. The second suction line 66b is provided with the second suction valve 57b. One end of the third suction line 66c is connected to a position on the side of the third carbon dioxide adsorption tower 51c rather than the collection-side third preheated gas valve 56c in the collection-side third pretreated gas line 33c. The third suction line 66c is provided with the third suction valve 57c. The other end of the first suction line 66a, the other end of the second suction line 66b, and the other end of the third suction line 66c are connected to a one end side portion of the main suction line 67. The other end of the main suction line 67 is connected to the suction port of the suction machine 55.

The suction machine 55 is, for example, a vacuum pump.

One end of the discharge line 68 is connected to the discharge port of the suction machine 55. The collection tank 63 is connected to the other end of the discharge line 68.

In this embodiment, as the acid gas adsorbent 16, an adsorbent containing silica and not containing alumina, or an adsorbent containing silica and alumina and having a (Si/Al) molar ratio of more than 2.5 is used. In this embodiment, an adsorbent containing alumina is used as the moisture adsorbent 17. In this embodiment, for example, zeolite is used as the carbon dioxide adsorbent.

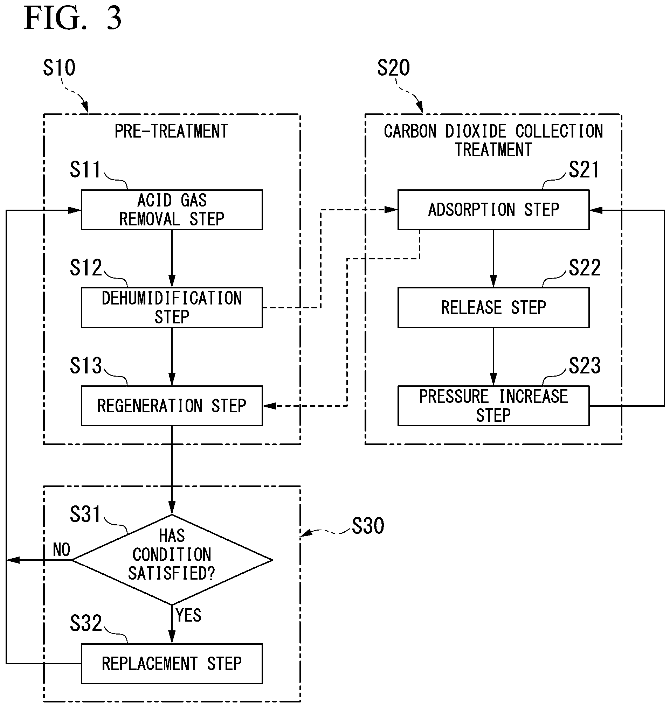

Next, the operation of the carbon dioxide collection facility described above will be described according to the flowchart shown in FIG. 3.

The carbon dioxide collection facility executes a pre-treatment S10 and a carbon dioxide collection treatment S20. The pre-treatment S10 is executed by the pre-treatment device 10, and the carbon dioxide collection treatment S20 is executed by the carbon dioxide collection device 50.

In the pre-treatment S10, an acid gas removal step S11, a dehumidification step S12, and a regeneration step S13 are executed. It is assumed that the moisture adsorption amount of the moisture adsorbent 17 in the first dehumidification tower 11a is extremely small and the moisture adsorption amount of the moisture adsorbent 17 in the second dehumidification tower 11b is large. In this case, as shown in FIG. 1, the first exhaust gas valve 41a is in an open state, the second exhaust gas valve 41b is in a closed state, the dehumidification-side first pretreated gas valve 43a is in an open state, the dehumidification-side second pretreated gas valve 43b is in a closed state, the first moisture-rich gas valve 44a is in a closed state, the second moisture-rich gas valve 44b is in an open state, the dehumidification-side first off-gas valve 45a is in a closed state, and the dehumidification-side second off-gas valve 45b is in an open state.

In this case, the exhaust gas from the exhaust gas generation source 1 flows into the first dehumidification tower 11a through the main exhaust gas line 21, the blower 6, the first exhaust gas line 22a, and the first exhaust gas valve 41a. The exhaust gas flowing into the first dehumidification tower 11a first passes through the acid gas adsorbent 16 in the first dehumidification tower 11a. As the exhaust gas passes through the acid gas adsorbent 16, most of the acid gas contained in the exhaust gas is adsorbed by the acid gas adsorbent 16 (acid gas removal step S11). An acid gas removal gas which is the exhaust gas having passed through the acid gas adsorbent 16 passes through the moisture adsorbent 17 in the first dehumidification tower 11a. As the acid gas removal gas passes through the moisture adsorbent 17, most of the moisture contained in the acid gas removal gas is adsorbed by the moisture adsorbent 17, and the remainder is exhausted from the first dehumidification tower 11a as a pretreated gas. That is, in the first dehumidification tower 11a, the acid gas and moisture in the exhaust gas are removed. The pretreated gas is sent to the carbon dioxide collection device 50 through the dehumidification-side first pretreated gas line 31a, the dehumidification-side first pretreated gas valve 43a, and the main pretreated gas line 32.

Furthermore, in this case, the off-gas with low moisture content flows from the carbon dioxide collection device 50 into the second dehumidification tower 11b through the main off-gas line 38m, the dehumidification-side second off-gas line 39b, and the dehumidification-side second off-gas valve 45b. The off-gas having flowed into the second dehumidification tower 11b passes through the moisture adsorbent 17 in the second dehumidification tower 11b. As the off-gas passes through the moisture adsorbent 17, the moisture is released from the moisture adsorbent 17. As a result, the off-gas becomes a gas that is rich in moisture. The gas that is rich in moisture passes through the acid gas adsorbent 16 in the second dehumidification tower 11b. As the gas that is rich in moisture passes through the acid gas adsorbent 16, the acid gas is released from the acid gas adsorbent 16. As a result, the gas that is rich in moisture becomes a gas that is rich in moisture and acid gas. The gas that is rich in moisture and acid gas is exhausted from the second dehumidification tower 11b. That is, the moisture adsorbent 17 and the acid gas adsorbent 16 are regenerated in the second dehumidification tower 11b. The gas that is rich in moisture and acid gas is discharged to the outside through the second moisture-rich gas line 35b, the second moisture-rich gas valve 44b, the main moisture-rich gas line 36, and the dehumidification vacuum pump 7 (regeneration step S13). Furthermore, the gas that is rich in moisture and acid gas may be discharged to the atmosphere or tank.

As described above, when the acid gas removal step S11 and the dehumidification step S12 are executed in the first dehumidification tower 11a, the moisture adsorption amount of the moisture adsorbent 17 in the first dehumidification tower 11a increases, and the acid gas adsorption amount of the acid gas adsorbent 16 in the first dehumidification tower 11a increases. Further, when the regeneration step S13 is executed in the second dehumidification tower 11b, the moisture adsorption amount of the moisture adsorbent 17 in the second dehumidification tower 11b becomes extremely small, and the acid gas adsorption amount of the acid gas adsorbent 16 in the second dehumidification tower 11b becomes extremely small.

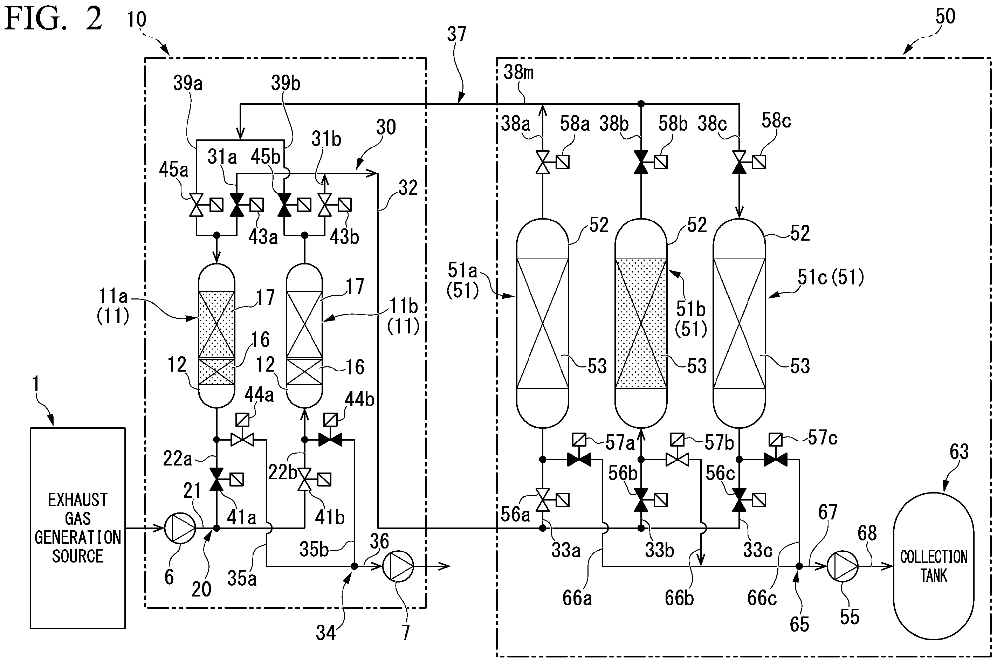

Further, it is assumed that the moisture adsorption amount of the moisture adsorbent 17 in the first dehumidification tower 11a is large and the moisture adsorption amount of the moisture adsorbent 17 in the second dehumidification tower 11b is extremely small. In this case, as shown in FIG. 2, the first exhaust gas valve 41a is in a closed state, the second exhaust gas valve 41b is in an open state, the dehumidification-side first pretreated gas valve 43a is in a closed state, the dehumidification-side second pretreated gas valve 43b is in an open state, the first moisture-rich gas valve 44a is in an open state, the second moisture-rich gas valve 44b is in a closed state, the dehumidification-side first off-gas valve 45a is in an open state, and the dehumidification-side second off-gas valve 45b is in a closed state.

In this case, the exhaust gas from the exhaust gas generation source 1 flows into the second dehumidification tower 11b through the main exhaust gas line 21, the blower 6, the second exhaust gas line 22b, and the second exhaust gas valve 41b. The exhaust gas having flowed into the second dehumidification tower 11b first passes through the acid gas adsorbent 16 in the second dehumidification tower 11b. As the exhaust gas passes through the acid gas adsorbent 16, most of the acid gas contained in the exhaust gas is adsorbed by the acid gas adsorbent 16 (acid gas removal step S11). The acid gas removal gas which is the exhaust gas having passed through the acid gas adsorbent 16 passes through the moisture adsorbent 17 in the second dehumidification tower 11b. As the acid gas removal gas passes through the moisture adsorbent 17, most of the moisture not contained in the acid gas removal gas is adsorbed by the moisture adsorbent 17, and the remainder is exhausted from the second dehumidification tower 11b as the pretreated gas. That is, the acid gas and moisture in the exhaust gas are removed in the second dehumidification tower 11b. The pretreated gas is sent to the carbon dioxide collection device 50 through the dehumidification-side second pretreated gas line 31b, the dehumidification-side second pretreated gas valve 43b, and the main pretreated gas line 32 (dehumidification step S12).

Further, in this case, the off-gas with low moisture content flows from the carbon dioxide collection device 50 into the first dehumidification tower 11a through the main off-gas line 38m, the dehumidification-side first off-gas line 39a, and the dehumidification-side first off-gas valve 45a. The off-gas having flowed into the first dehumidification tower 11a passes through the moisture adsorbent 17 in the first dehumidification tower 11a. As the off-gas passes through the moisture adsorbent 17, the moisture is released from the moisture adsorbent 17. As a result, the off-gas becomes a gas that is rich in moisture. The gas that is rich in moisture passes through the acid gas adsorbent 16 in the first dehumidification tower 11a. As the gas that is rich in moisture passes through the acid gas adsorbent 16, the acid gas is released from the acid gas adsorbent 16. As a result, the gas that is rich in moisture becomes a gas that is rich in moisture and acid gas. The gas that is rich in moisture and acid gas is exhausted from the first dehumidification tower 11a. That is, the moisture adsorbent 17 and the acid gas adsorbent 16 are regenerated in the first dehumidification tower 11a. The gas that is rich in moisture and acid gas is discharged to the outside through the first moisture-rich gas line 35a, the first moisture-rich gas valve 44a, the main moisture-rich gas line 36, and the dehumidification vacuum pump 7 (regeneration step S13).

As described above, in the first dehumidification tower 11a and the second dehumidification tower 11b of the pre-treatment device 10, the dehumidification step S12 is executed after the acid gas removal step S11, the regeneration step S13 is executed after the dehumidification step S12, and the acid gas removal step S11 is executed after the regeneration step S13. Further, when the acid gas removal step S11 and the dehumidification step S12 are executed in the first dehumidification tower 11a, the regeneration step S13 is executed in the second dehumidification tower 11b. Further, when the acid gas removal step S11 and the dehumidification step S12 are executed in the second dehumidification tower 11b, the regeneration step S13 is executed in the first dehumidification tower 11a. Therefore, in this embodiment, the acid gas and moisture in the exhaust gas can be continuously removed.

An adsorption step S21, a release step S22, and a pressure increase step S23 are executed in the carbon dioxide collection treatment S20. It is assumed that the carbon dioxide adsorption amount of the carbon dioxide adsorbent 53 in the first carbon dioxide adsorption tower 51a and the carbon dioxide adsorbent 53 in the second carbon dioxide adsorption tower 51b is extremely small and the carbon dioxide adsorption amount of the carbon dioxide adsorbent 53 in the third carbon dioxide adsorption tower 51c is large. Further, it is assumed that the pressure inside the first carbon dioxide adsorption tower 51a is the negative pressure, and the pressure inside the second carbon dioxide adsorption tower 51b is the approximately atmospheric pressure. In this case, as shown in FIG. 1, the collection-side first preheated gas valve 56a is in a closed state, the collection-side second preheated gas valve 56b is in an open state, the collection-side third preheated gas valve 56c is in a closed state, the first suction valve 57a is in a closed state, the second suction valve 57b is in a closed state, the third suction valve 57c is in an open state, the collection-side first off-gas valve 58a is in a half opened state, the collection-side second off-gas valve 58b is in an open state, and the collection-side third off-gas valve 58c is in a closed state.

In this case, the pretreated gas from the pre-treatment device 10 flows into the second carbon dioxide adsorption tower 51b through the main pretreated gas line 32, the collection-side second pretreated gas line 33b, and the collection-side second preheated gas valve 56b. As the pretreated gas having flowed into the second carbon dioxide adsorption tower 51b passes through the carbon dioxide adsorbent 53 in the second carbon dioxide adsorption tower 51b, most of carbon dioxide contained in the pretreated gas is adsorbed by the carbon dioxide adsorbent 53, and the remainder is exhausted from the second carbon dioxide adsorption tower 51b as the off-gas. That is, the carbon dioxide adsorbent 53 in the second carbon dioxide adsorption tower 51b adsorbs carbon dioxide in the pretreated gas (adsorption step S21). A part of the off-gas exhausted from the second carbon dioxide adsorption tower 51b is sent to the dehumidification tower 11 in the regeneration step S13 through the collection-side second off-gas line 38b, the collection-side second off-gas valve 58b, and the main off-gas line 38m.

Further, a part of the remainder of the off-gas exhausted from the second carbon dioxide adsorption tower 51b is sent into the first carbon dioxide adsorption tower 51a through the collection-side second off-gas line 38b, the collection-side second off-gas valve 58b, the main off-gas line 38m, the collection-side first off-gas line 38a, and the collection-side first off-gas valve 58a. As a result, the pressure inside the first carbon dioxide adsorption tower 51a is increased from the negative pressure to the approximately atmospheric pressure (pressure increase step S23).

Furthermore, in this case, the inside of the third carbon dioxide adsorption tower 51c is vacuum-suctioned by the suction machine 55 through the third suction line 66c, the third suction valve 57c, and the main suction line 67. As a result, the carbon dioxide adsorbed by the carbon dioxide adsorbent 53 in the third carbon dioxide adsorption tower 51c is released and discharged from the suction machine 55. A gas containing the carbon dioxide is sent to the collection tank 63 through the discharge line 68 (release step S22).

As described above, when the adsorption step S21 is executed in the second carbon dioxide adsorption tower 51b, the carbon dioxide adsorption amount of the carbon dioxide adsorbent 53 in the second carbon dioxide adsorption tower 51b increases. Further, when the release step S22 is executed in the third carbon dioxide adsorption tower 51c, the carbon dioxide adsorption amount of the carbon dioxide adsorbent 53 in the third carbon dioxide adsorption tower 51c becomes extremely small and the pressure inside the third carbon dioxide adsorption tower 51c becomes a negative pressure. Further, when the pressure increase step S23 is executed in the first carbon dioxide adsorption tower 51a, the pressure inside the first carbon dioxide adsorption tower 51a becomes an approximately atmospheric pressure. Furthermore, at this time, the carbon dioxide adsorption amount of the carbon dioxide adsorbent 53 in the first carbon dioxide adsorption tower 51a is extremely small.

Further, it is assumed that the carbon dioxide adsorption amount of the carbon dioxide adsorbent 53 in the first carbon dioxide adsorption tower 51a and the carbon dioxide adsorbent 53 in the third carbon dioxide adsorption tower 51c is extremely small and the carbon dioxide adsorption amount of the carbon dioxide adsorbent 53 in the second carbon dioxide adsorption tower 51b is large.

Furthermore, it is assumed that the pressure inside the first carbon dioxide adsorption tower 51a is the approximately atmospheric pressure and the pressure inside the third carbon dioxide adsorption tower 51c is the negative pressure. In this case, as shown in FIG. 2, the collection-side first preheated gas valve 56a is in an open state, the collection-side second preheated gas valve 56b is in a closed state, the collection-side third preheated gas valve 56c is in a closed state, the first suction valve 57a is in a closed state, the second suction valve 57b is in an open state, the third suction valve 57c is in a closed state, the collection-side first off-gas valve 58a is in an open state, the collection-side second off-gas valve 58b is in a closed state, and the collection-side third off-gas valve 58c is in a half opened state.

In this case, the pretreated gas from the pre-treatment device 10 flows into the first carbon dioxide adsorption tower 51a through the main pretreated gas line 32, the collection-side first pretreated gas line 33a, and the collection-side first preheated gas valve 56a. As the pretreated gas having flowed into the first carbon dioxide adsorption tower 51a passes through the carbon dioxide adsorbent 53 in the first carbon dioxide adsorption tower 51a, most of carbon dioxide contained in the pretreated gas is adsorbed by the carbon dioxide adsorbent 53, and the remainder is exhausted from the first carbon dioxide adsorption tower 51a as the off-gas. That is, the carbon dioxide adsorbent 53 in the first carbon dioxide adsorption tower 51a adsorbs carbon dioxide in the pretreated gas (adsorption step S21). A part of the off-gas exhausted from the first carbon dioxide adsorption tower 51a is sent to the dehumidification tower 11 in the regeneration step S13 through the collection-side first off-gas line 38a, the collection-side first off-gas valve 58a, and the main off-gas line 38m.

Further, a part of the remainder of the off-gas exhausted from the first carbon dioxide adsorption tower 51a is sent to the third carbon dioxide adsorption tower 51c through the collection-side first off-gas line 38a, the collection-side first off-gas valve 58a, the main off-gas line 38m, the collection-side third off-gas line 38c, and the collection-side third off-gas valve 58c. As a result, the pressure inside the third carbon dioxide adsorption tower 51c is increased from the negative pressure to the approximately atmospheric pressure (pressure increase step S23).

Furthermore, in this case, the inside of the second carbon dioxide adsorption tower 51b is vacuum-suctioned by the suction machine 55 through the second suction line 66b, the second suction valve 57b, and the main suction line 67. As a result, carbon dioxide adsorbed by the carbon dioxide adsorbent 53 in the second carbon dioxide adsorption tower 51b is released and discharged from the suction machine 55. A gas containing the carbon dioxide is sent to the collection tank 63 through the discharge line 68 (release step S22).

As described above, in the first carbon dioxide adsorption tower 51a, the second carbon dioxide adsorption tower 51b, and the third carbon dioxide adsorption tower 51c of the carbon dioxide collection device 50, the release step S22 is executed after the adsorption step S21, the pressure increase step S23 is executed after the release step S22, and the adsorption step S21 is executed after the pressure increase step S23. Further, when the adsorption step S21 is executed in the second carbon dioxide adsorption tower 51b, the release step S22 is executed in the third carbon dioxide adsorption tower 51c and the pressure increase step S23 is executed in the first carbon dioxide adsorption tower 51a. Further, when the carbon dioxide adsorption amount of the carbon dioxide adsorbent 53 in the second carbon dioxide adsorption tower 51b increases, the release step S22 is executed in the second carbon dioxide adsorption tower 51b, the pressure increase step S23 is executed in the third carbon dioxide adsorption tower 51c, and the adsorption step S21 is executed in the first carbon dioxide adsorption tower 51a. Therefore, in this embodiment, the carbon dioxide in the pretreated gas can be continuously collected.

In this embodiment, as described above, the pressure increase step S23 is executed after the release step S22. The vacuum degree in the carbon dioxide adsorption tower 51 after the release step S22 is high. Therefore, if the adsorption step S21 is executed while the vacuum degree is high, the exhaust gas passes through the carbon dioxide adsorbent 53 to decrease the carbon dioxide adsorption efficiency even if the exhaust gas is sent into the carbon dioxide adsorption tower 51. Therefore, in this embodiment, the pressure increase step S23 is executed after the release step S22, and then the adsorption step S21 is executed.

Furthermore, in this embodiment, an adsorbent replacement step S30 for the adsorbent contained in the pre-treatment device 10 is also executed. The adsorbent replacement step S30 is a step executed by an operator. The operator determines whether or not the acid gas adsorbent 16 and the moisture adsorbent 17 satisfy a predetermined replacement condition (determination step S31).

In the determination step S31, for example, a part of the acid gas adsorbent 16 and a part of the moisture adsorbent 17 in the dehumidification tower 11 are sampled, and the sampled adsorbents are analyzed. There are various methods for analyzing adsorbents, but here the sampled adsorbent will be analyzed using the X-ray microanalysis method. This X-ray microanalysis method is a method of executing elemental analysis by irradiating a sample (sampled adsorbent) with an electron beam and measuring the characteristic X-rays that are generated during the irradiation. If this analysis result indicates that the degree of deterioration of the sampled adsorbent is equal to or larger than a predetermined level, it is determined that the replacement condition is satisfied.

Further, in the determination step S31, it may be determined that the replacement condition is satisfied when the period since the adsorbent was previously replaced is equal to or longer than a predetermined period without analyzing the adsorbent as described above. Further, in the determination step S31, it may be determined that the replacement condition is satisfied when the accumulated amount of gas that has passed through the replaced adsorbent since the adsorbent was previously replaced is equal to or larger than a predetermined amount.

When the operator determines that the replacement condition is satisfied, the adsorbent that satisfies the replacement condition is replaced with a new adsorbent (replacement step S32).

Furthermore, the adsorbent replacement step S30 is also executed on the adsorbent in the carbon dioxide collection device 50 in a similar manner.

Here, zeolite will be described. Zeolite is a general term for crystalline aluminosilicate. The chemical formula of zeolite can be expressed as below.

Me₂/xO · Al₂O₃ · mSiO₂ · nH₂O Me: X-valent cation

Therefore, zeolite contains silica (SiO₂) and alumina (Al₂O₃).

The crystal structure of zeolite is not uniform, and there are, for example, A type, X type, Y type, Ultra-stable Y (USY) type, beta type, and the like. In addition, as Me shown in the above chemical formula, Na ions, Li ions, Ca ions, and the like are used. Thus, there are various types of zeolites depending on the difference in their crystal structures and cations.

Zeolite having a relatively low silica content relative to alumina is called low-silica zeolite. The low-silica zeolite is zeolite with a (Si/Al) molar ratio of less than 2. Low-silica zeolites include, for example, some A-type zeolites and some X-type zeolites. Further, zeolites that contain more silica than alumina are called high-silica zeolites. This high-silica zeolite is zeolite having a (Si/Al) molar ratio of more than 2.5. Examples of high-silica zeolites include Y type, Ultra-stable Y (USY) type, beta type, and the like.

When zeolite comes into contact with acid gas, the alumina in the zeolite binds with the acid gas, and the moisture adsorption performance of zeolite decreases. Therefore, the tendency for the moisture adsorption performance to decrease when exposed to acid gas increases as the alumina becomes more in the zeolites ((Si/Al) molar ratio becomes smaller). That is, zeolites with a high alumina content (low (Si/Al) molar ratio) have low resistance to acid gas. Conversely, zeolites with a low alumina content (high (Si/Al) molar ratio) have high resistance to acid gas.

Further, an adsorbent containing alumina such as zeolite has a stronger moisture adsorption capacity than high-silica adsorbents, and can lower the dew point of exhaust gas. In other words, an adsorbent containing alumina can reduce the moisture concentration in exhaust gas compared to high-silica adsorbents. Therefore, the performance of lowering the dew point of exhaust gas tends to increase as the alumina becomes more in the zeolites (as the (Si/Al) molar ratio becomes smaller).

In order to stabilize the amount of carbon dioxide adsorbed in the carbon dioxide adsorbent, it is preferable that the dew point of the gas passing through the carbon dioxide adsorbent is low, in other words, that the moisture concentration in this gas is low.

Therefore, in this embodiment, the moisture in the exhaust gas is adsorbed by the moisture adsorbent 17 of the pre-treatment device 10 before the exhaust gas is sent to the carbon dioxide collection device 50.

Representative moisture adsorbents include zeolite, as described above, and silica gel. This silica gel is resistant to acid gas. Therefore, even if silica gel is used as an adsorbent for adsorbing moisture from the exhaust gas containing moisture and acid gas, the dehumidification performance of the silica gel is not significantly reduced. On the other hand, when an adsorbent containing alumina is used to adsorb moisture from exhaust gas that contain moisture and acid gas, the alumina binds with the acid gas, reducing the dehumidification performance of the adsorbent. That is, as described above, an adsorbent containing alumina has a lower resistance to acid gas than silica gel. As described above, from the viewpoint of resistance to acid gas, an adsorbent having a high silica content relative to the alumina content is preferable.

On the other hand, an adsorbent containing alumina can lower the dew point of exhaust gas compared to silica gel. In other words, an adsorbent containing alumina can reduce the moisture concentration in exhaust gas compared to silica gel. As described above, from the viewpoint of lowering the dew point of the gas, an adsorbent having a relatively high alumina content relative to the silica content is preferable.

In this embodiment, from the viewpoint of lowering the dew point of the gas sent to the carbon dioxide collection device 50, an adsorbent containing alumina is used as the moisture adsorbent 17 as described above. As the adsorbent containing alumina, activated alumina and zeolite described above and the like are known. Furthermore, when using zeolite as the moisture adsorbent 17, it is preferable to use X-type zeolite, which is classified as a low-silica zeolite having a (Si/Al) molar ratio of less than 2 among the multiple types of zeolite.

However, since the moisture adsorbent 17 containing alumina has low resistance to acid gas, in this embodiment, the exhaust gas is passed through the acid gas adsorbent 16 to remove most of the acid gas in the exhaust gas, and then the gas is passed through the moisture adsorbent 17. Therefore, the acid gas adsorbent 16 serves to protect the moisture adsorbent 17 used in this embodiment by adsorbing the acid gas. Since it is preferable for the acid gas adsorbent 16 to have high resistance to acid gas, in this embodiment, an adsorbent containing silica but not alumina, or an adsorbent containing silica and alumina with a (Si/Al) molar ratio of more than 2.5 is used. Silica gel is an adsorbent that contains silica but does not contain alumina. In addition, an example of an adsorbent containing silica and alumina and having a (Si/Al) molar ratio of more than 2.5 is high-silica zeolite, which has a (Si/Al) molar ratio of more than 2.5. Furthermore, when zeolite is used as the acid gas adsorbent 16, it is preferable to use Y-type, USY-type, or beta-type zeolite, which has a (Si/Al) molar ratio of more than 5 and is classified as high-silica zeolite.

As described above, in this embodiment, since the adsorbent containing alumina is used as the moisture adsorbent 17, the gas sent to the carbon dioxide collection device 50 can have a low dew point. The moisture adsorbent 17 containing alumina has low resistance to acid gas. However, in this embodiment, since the exhaust gas is passed through the acid gas adsorbent 16 to remove most of the acid gas in the exhaust gas and then the gas is passed through the moisture adsorbent 17, the moisture adsorption performance of the moisture adsorbent 17 can be maintained for a long period of time.

### "Second embodiment"

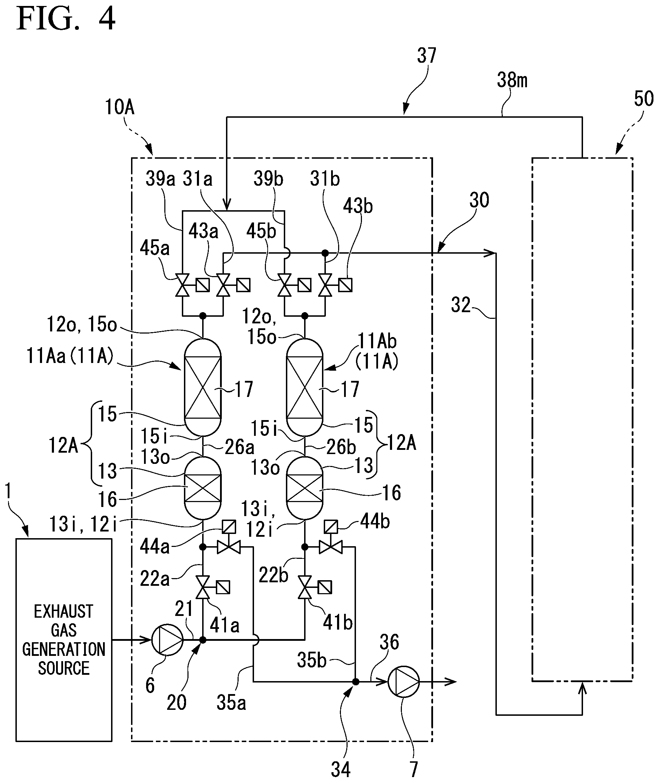

A second embodiment of the carbon dioxide collection facility will be described with reference to FIG. 4.

As shown in FIG. 4, the carbon dioxide collection facility of this embodiment includes a pre-treatment device 10A and the carbon dioxide collection device 50 as in the carbon dioxide collection facility of the first embodiment. The carbon dioxide collection device 50 of this embodiment is the same as the carbon dioxide collection device 50 of the first embodiment. On the other hand, the pre-treatment device 10A of this embodiment is different from the pre-treatment device 10 of the first embodiment.

The dehumidification container 12 of the pre-treatment device 10 of the first embodiment is a single container. On the other hand, a dehumidification container 12A of a dehumidification tower 11A of the pre-treatment device 10A of this embodiment includes two containers of an acid gas adsorbent container 13 and a moisture adsorbent container 15. The acid gas adsorbent 16 is filled in the acid gas adsorbent container 13. Further, the moisture adsorbent 17 is filled in the moisture adsorbent container 15.

The acid gas adsorbent container 13 includes a first port 13i into which an exhaust gas from the blower 6 can flow and a second port 13o from which an acid gas removal gas that is a gas having passed through the acid gas adsorbent 16 can flow out. Further, the moisture adsorbent container 15 includes a first port 15i into which an acid gas removal gas can flow and a second port 15o from which a pretreated gas that is a gas having passed through the moisture adsorbent 17 can flow out. The first port 13i of the acid gas adsorbent container 13 is the first port 12i of the dehumidification container 12A. Further, the second port 15o of the moisture adsorbent container 15 is the second port 12o of the dehumidification container 12A.

The second port 13o of the acid gas adsorbent container 13 constituting a part of the dehumidification container 12A of a first dehumidification tower 11Aa and the first port 15i of the moisture adsorbent container 15 constituting the other part of the dehumidification container 12A of the first dehumidification tower 11Aa are connected to each other by a first acid gas removal gas line 26a. The second port 13o of the acid gas adsorbent container 13 constituting a part of the dehumidification container 12A of a second dehumidification tower 11Ab and the first port 15i of the moisture adsorbent container 15 constituting the other part of the dehumidification container 12A of the second dehumidification tower 11Ab are connected to each other by a second acid gas removal gas line 26b.

As described above, since the exhaust gas can be passed through the acid gas adsorbent 16 and then through the moisture adsorbent 17 even when the dehumidification container 12A includes two containers, it is possible to obtain the same effect as that of the first embodiment even in this embodiment.

### "Third embodiment"

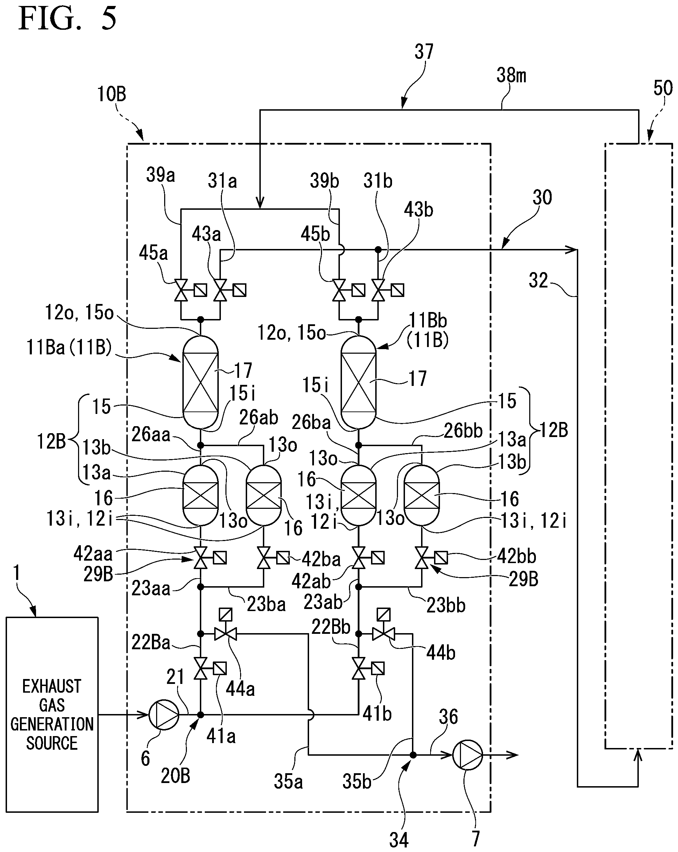

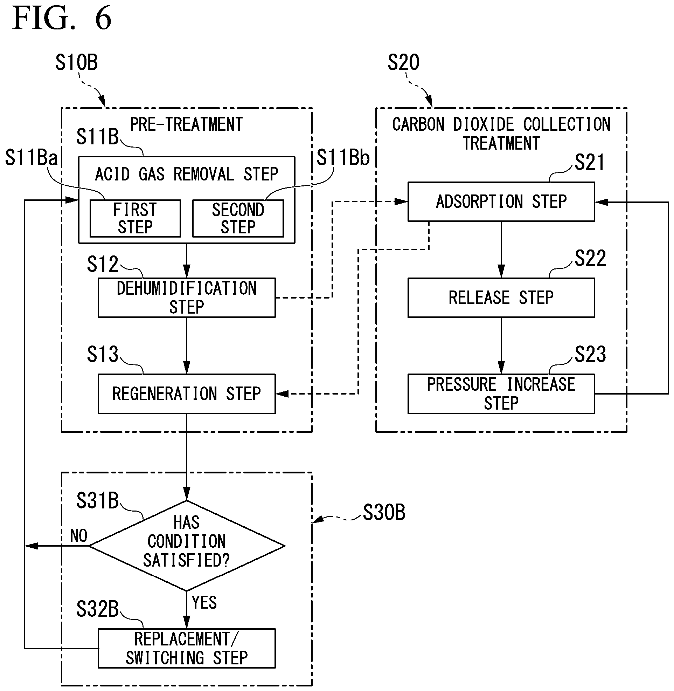

A third embodiment of the carbon dioxide collection facility will be described with reference to FIGS. 5 and 6.

As shown in FIG. 5, the carbon dioxide collection facility of this embodiment includes a pre-treatment device 10B and the carbon dioxide collection device 50 as in the carbon dioxide collection facility of each of the above-described embodiments. The carbon dioxide collection device 50 of this embodiment is the same as the carbon dioxide collection device 50 of each of the above-described embodiments. On the other hand, the pre-treatment device 10B of this embodiment is different from the pre-treatment device 10 of the first embodiment.

The dehumidification container 12 of the pre-treatment device 10 of the first embodiment is a single container. On the other hand, a dehumidification container 12B of a pre-treatment device 10B of this embodiment includes three containers of a first acid gas adsorbent container 13a, a second acid gas adsorbent container 13b, and the moisture adsorbent container 15. The acid gas adsorbent 16 is filled in the first acid gas adsorbent container 13a and the second acid gas adsorbent container 13b. Further, the moisture adsorbent 17 is filled in the moisture adsorbent container 15.

The first acid gas adsorbent container 13a and the second acid gas adsorbent container 13b include the first port 13i into which an exhaust gas from the blower 6 can flow and the second port 13o from which an acid gas removal gas that is a gas having passed through the acid gas adsorbent 16 can flow out. Further, the moisture adsorbent container 15 includes the first port 15i into which an acid gas removal gas can flow and the second port 15o from which a pretreated gas that is a gas having passed through the moisture adsorbent 17 can flow out. The first port 12i of the first acid gas adsorbent container 13a and the first port 13i of the second acid gas adsorbent container 13b are the first port 12i of the dehumidification container 12B. Further, the second port 15o of the moisture adsorbent container 15 is the second port 12o of the dehumidification container 12B.

An exhaust gas line 20B of this embodiment includes the main exhaust gas line 21, a first exhaust gas line 22Ba, a second exhaust gas line 22Bb, a first branch exhaust gas line 23aa and a second branch exhaust gas line 23ba which are branched from the first exhaust gas line 22Ba, and a first branch exhaust gas line 23ab and a second branch exhaust gas line 23bb which are branched from the second exhaust gas line 22Bb. One end of the main exhaust gas line 21 is connected to the exhaust gas generation source 1 as in one end of the main exhaust gas line 21 of each of the above-described embodiments. One end of the first exhaust gas line 22Ba and one end of the second exhaust gas line 22Bb are connected to the other end of the main exhaust gas line 21. The first exhaust gas line 22Ba is provided with the first exhaust gas valve 41a. The second exhaust gas line 22Bb is provided with the second exhaust gas valve 41b.

One end of the first branch exhaust gas line 23aa and one end of the second branch exhaust gas line 23ba are connected to the other end of the first exhaust gas line 22Ba. The other end of the first branch exhaust gas line 23aa is connected to the first port 13i of the first acid gas adsorbent container 13a constituting a part of the dehumidification container 12B of the first dehumidification tower 11Ba. The other end of the second branch exhaust gas line 23ba is connected to the first port 13i of the second acid gas adsorbent container 13b constituting a part of the dehumidification container 12B of the first dehumidification tower 11Ba. The first branch exhaust gas line 23aa is provided with a first branch exhaust gas valve 42aa. The second branch exhaust gas line 23ba is provided with a second branch exhaust gas valve 42ba.

One end of the first branch exhaust gas line 23ab and one end of the second branch exhaust gas line 23bb are connected to the other end of the second exhaust gas line 22Bb. The other end of the first branch exhaust gas line 23ab is connected to the first port 13i of the first acid gas adsorbent container 13a constituting a part of the dehumidification container 12B of a second dehumidification tower 11Bb. The other end of the second branch exhaust gas line 23bb is connected to the first port 13i of the second acid gas adsorbent container 13b constituting a part of the dehumidification container 12B of the second dehumidification tower 11Bb. The first branch exhaust gas line 23ab is provided with a first branch exhaust gas valve 42ab. The second branch exhaust gas line 23bb is provided with a second branch exhaust gas valve 42bb.

The second port 13o of the first acid gas adsorbent container 13a constituting a part of the dehumidification container 12B of the first dehumidification tower 11Ba and the first port 15i of the moisture adsorbent container 15 constituting the other part of the dehumidification container 12B of the first dehumidification tower 11Ba are connected to each other by a first a acid gas removal gas line 26aa. The second port 13o of the second acid gas adsorbent container 13b constituting a part of the dehumidification container 12B of the first dehumidification tower 11Ba and the first port 15i of the moisture adsorbent container 15 constituting the other part of the dehumidification container 12B of the first dehumidification tower 11Ba are connected to each other by a first b acid gas removal gas line 26ab.

The second port 13o of the first acid gas adsorbent container 13a constituting a part of the dehumidification container 12B of the second dehumidification tower 11Bb and the first port 15i of the moisture adsorbent container 15 constituting the other part of the dehumidification container 12B of the second dehumidification tower 11Bb are connected to each other by the second a acid gas removal gas line 26ba. The second port 13o of the second acid gas adsorbent container 13b constituting a part of the dehumidification container 12B of the second dehumidification tower 11Bb and the first port 15i of the moisture adsorbent container 15 constituting the other part of the dehumidification container 12B of the second dehumidification tower 11Bb are connected to each other by a second b acid gas removal gas line 26bb.

The pre-treatment device 10B of this embodiment includes a switching mechanism 29B capable of switching a first state in which the exhaust gas from the blower 6 is guided to the first port 13i of the first acid gas adsorbent container 13a and a second state in which the exhaust gas from the blower 6 is guided to the first port 13i of the second acid gas adsorbent container 13b. The switching mechanism 29B includes the first branch exhaust gas lines 23aa and 23ab, the second branch exhaust gas lines 23ba and 23bb, the first branch exhaust gas valves 42aa and 42ab, and the second branch exhaust gas valves 42ba and 42bb described above.

Next, the operation of the carbon dioxide collection facility described above will be described according to the flowchart shown in FIG. 6.

The carbon dioxide collection facility executes a pre-treatment S10B and the carbon dioxide collection treatment S20 as in the carbon dioxide collection facility of each of the above-described embodiments. The pre-treatment S10B is executed by the pre-treatment device 10B, and the carbon dioxide collection treatment S20 is executed by the carbon dioxide collection device 50. The carbon dioxide collection treatment S20 of this embodiment is the same as the carbon dioxide collection treatment S20 of each of the above-described embodiments. The pre-treatment S10B of this embodiment is different from the pre-treatment S10 of the first embodiment.

The pre-treatment S10B of this embodiment also executes an acid gas removal step S11B, the dehumidification step S12, and the regeneration step S13 as in the pre-treatment S10 of the first embodiment. However, the acid gas removal step S 11B of this embodiment includes a first step SllBa and a second step S11Bb. In the first step S11Ba, the exhaust gas is passed through the acid gas adsorbent 16 (first acid gas adsorbent) filled in the first acid gas adsorbent container 13a to remove the acid gas in the exhaust gas. In the second step S11Bb, the exhaust gas is passed through the acid gas adsorbent 16 (second acid gas adsorbent) filled in the second acid gas adsorbent container 13b to remove the acid gas in the exhaust gas.

In the dehumidification step S12 of this embodiment, the moisture adsorbent 17 filled in the moisture adsorbent container 15 removes the moisture from the acid gas removal gas from the acid gas adsorbent container in which the acid gas removal step S11B is executed in the first acid gas adsorbent container 13a and the second acid gas adsorbent container 13b.

In the regeneration step S13 of this embodiment, the moisture adsorbent 17 filled in the moisture adsorbent container 15 is regenerated with the off-gas from the carbon dioxide collection device 50. Further, in the regeneration step S13 of this embodiment, the acid gas adsorbent 16 filled in the acid gas adsorbent container in which the acid gas removal step S11B has been executed in the first acid gas adsorbent container 13a and the second acid gas adsorbent container 13b is regenerated with the off-gas having passed through the moisture adsorbent container 15.

Furthermore, in this embodiment, an adsorbent replacement/switching step S30B of the pre-treatment device 10B is also executed. The replacement/switching step S30B is a treatment executed by the operator. The replacement/switching step S30B includes a determination step S31B and a replacement/switching step S32B.

In the determination step S31B, the operator determines whether or not the acid gas adsorbent 16 and the moisture adsorbent 17 satisfy a predetermined replacement/switching condition.

In the determination step S31B, for example, a part of the acid gas adsorbent 16 and a part of the moisture adsorbent 17 in the dehumidification tower 11B are sampled, and the sampled adsorbents are analyzed. If the analysis result indicates that the degree of deterioration of the sampled adsorbent is equal to or larger than a predetermined level, it is determined that the replacement/switching condition is satisfied.

Further, in the determination step S31B, it may be determined that the replacement condition or switching condition is satisfied when the period since the adsorbent was previously replaced is equal to or longer than a predetermined period without analyzing the adsorbent as described above. Further, in the determination step S31B, it may be determined that the replacement condition or switching condition is satisfied when the accumulated amount of gas that has passed through the replaced adsorbent since the adsorbent was previously replaced is equal to or larger than a predetermined amount.

When the operator determines that the replacement condition is satisfied, the adsorbent that satisfies the replacement condition is replaced with a new adsorbent. Further, when the operator determines that one acid gas adsorbent 16 in the acid gas adsorbent 16 filled in the first acid gas adsorbent container 13a and the acid gas adsorbent 16 filled in the second acid gas adsorbent container 13b satisfies the switching condition, the flow of the exhaust gas into one acid gas adsorbent 16 is stopped, and the acid gas is passed through the other acid gas adsorbent 16 (replacement/switching step S32B). For example, when the operator determines that the acid gas adsorbent 16 filled in the first acid gas adsorbent container 13a in the acid gas adsorbent 16 filled in the first acid gas adsorbent container 13a and the acid gas adsorbent 16 filled in the second acid gas adsorbent container 13b satisfied the switching condition, the first branch exhaust gas valves 42aa and 42ab are closed and the second branch exhaust gas valves 42ba and 42bb are opened in the replacement/switching step S32B.

Here, the operator closes the first branch exhaust gas valves 42aa and 42ab and opens the second branch exhaust gas valves 42ba and 42bb. However, the control device may close the first branch exhaust gas valves 42aa and 42ab and open the second branch exhaust gas valves 42ba and 42bb. In this case, the control device executes the determination step S31B, and the control device controls the opening and closing state of the first branch exhaust gas valves 42aa and 42ab and the second branch exhaust gas valves 42ba and 42bb according to the determination result of the determination step

S31B.

As described above, even if the dehumidification container 12B includes three containers, the exhaust gas can be passed through the acid gas adsorbent 16 and then through the moisture adsorbent 17. Accordingly, it is possible to obtain the same effect as that of each of the above-described embodiments even in this embodiment.

Further, in this embodiment, when the switching condition is satisfied after the acid gas adsorbent 16 filled in one container of the first acid gas adsorbent container 13a and the second acid gas adsorbent container 13b has deteriorated, the acid gas in the exhaust gas can be adsorbed by the acid gas adsorbent 16 filled in the other container. Thus, even when the acid gas adsorbent 16 filled in one container of the first acid gas adsorbent container 13a and the second acid gas adsorbent container 13b has deteriorated, the pre-treatment S10B of the pre-treatment device 10B can be continuously executed.

### "Fourth embodiment"

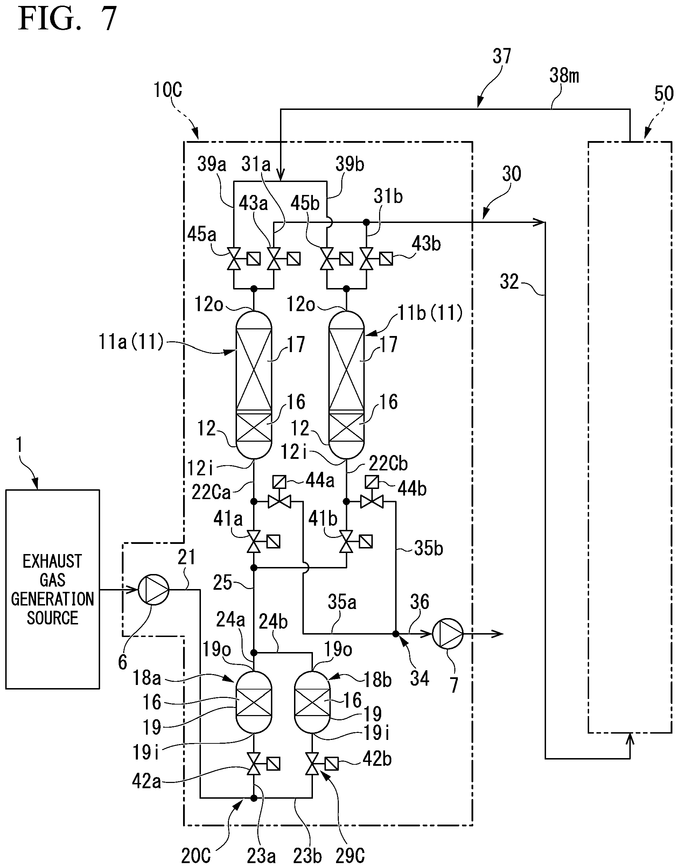

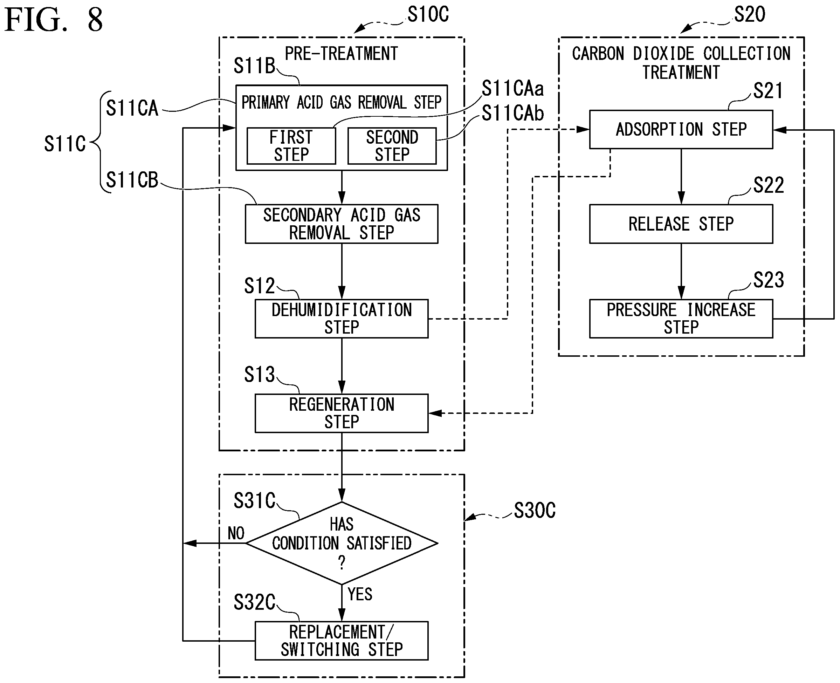

A fourth embodiment of the carbon dioxide collection facility will be described with reference to FIGS. 7 and 8.

As shown in FIG. 7, the carbon dioxide collection facility of this embodiment includes a pre-treatment device 10C and the carbon dioxide collection device 50 as in the carbon dioxide collection facility of each of the above-described embodiments. The carbon dioxide collection device 50 of this embodiment is the same as the carbon dioxide collection device 50 of each of the above-described embodiments. On the other hand, the pre-treatment device 10C of this embodiment is different from the pre-treatment device 10 of the first embodiment.

The pre-treatment device 10C of this embodiment is a device in which a first acid gas adsorption tower 18a, a second acid gas adsorption tower 18b, and a switching mechanism 29C are added to the pre-treatment device 10 of the first embodiment.

Each of the first acid gas adsorption tower 18a and the second acid gas adsorption tower 18b includes the acid gas adsorbent 16 capable of adsorbing an acid gas and a container 19 filled with the acid gas adsorbent 16. Each of the container 19 of the first acid gas adsorption tower 18a and the container 19 of the second acid gas adsorption tower 18b includes a first port 19i into which an exhaust gas from the blower 6 is able to flow and a second port 19o from which a gas having passed through the acid gas adsorbent 16 is able to flow out.

An exhaust gas line 20C of this embodiment includes the main exhaust gas line 21, a first branch exhaust gas line 23a, a second branch exhaust gas line 23b, a first primary treated gas line 24a, a second primary treated gas line 24b, a gas line junction 25, a first exhaust gas line 22Ca, and a second exhaust gas line 22Cb. One end of the main exhaust gas line 21 is connected to the exhaust gas generation source 1 as in one end of the main exhaust gas line 21 of each of the above-described embodiments. One end of the first branch exhaust gas line 23a and one end of the second branch exhaust gas line 23b are connected to the other end of the main exhaust gas line 21. The first port 19i of the first acid gas adsorption tower 18a is connected to the other end of the first branch exhaust gas line 23a. The first port 19i of the second acid gas adsorption tower 18b is connected to the other end of the second branch exhaust gas line 23b. The first branch exhaust gas line 23a is provided with a first branch exhaust gas valve 42a. The second branch exhaust gas line 23b is provided with a second branch exhaust gas valve 42b. One end of the first primary treated gas line 24a is connected to the second port 19o of the first acid gas adsorption tower 18a. One end of the second primary treated gas line 24b is connected to the second port 19o of the second acid gas adsorption tower 18b. One end of the gas line junction 25 is connected to the other end of the first primary treated gas line 24a and the other end of the second primary treated gas line 24b. One end of the first exhaust gas line 22Ca and one end of the second exhaust gas line 22Cb are connected to the other end of the gas line junction 25. The other end of the first exhaust gas line 22Ca is connected to the first port 12i of the first dehumidification tower 11a as in the first embodiment. The other end of the second exhaust gas line 22Cb is connected to the first port 12i of the second dehumidification tower 11b as in the first embodiment. The first exhaust gas line 22Ca is provided with the first exhaust gas valve 41a as in the first embodiment. The second exhaust gas line 22Cb is provided with the second exhaust gas valve 41b as in the first embodiment.

The switching mechanism 29C is configured to be able to switch a first state in which the exhaust gas from the blower 6 is guided to the first port 19i of the first acid gas adsorption tower 18a and a second state in which the exhaust gas from the blower 6 is guided to the first port 19i of the second acid gas adsorption tower 18b. Specifically, the switching mechanism 29C includes the first branch exhaust gas line 23a, the second branch exhaust gas line 23b, the first branch exhaust gas valve 42a, and the second branch exhaust gas valve 42b.

Next, the operation of the carbon dioxide collection facility described above will be described according to the flowchart shown in FIG. 8.

The carbon dioxide collection facility executes a pre-treatment S10C and the carbon dioxide collection treatment S20 as in the carbon dioxide collection facility of each of the above-described embodiments. The pre-treatment S10C is executed by the pre-treatment device 10C, and the carbon dioxide collection treatment S20 is executed by the carbon dioxide collection device 50. The carbon dioxide collection treatment S20 of this embodiment is the same as the carbon dioxide collection treatment S20 of each of the above-described embodiments. The pre-treatment S10C of this embodiment is different from the pre-treatment S10 of the first embodiment.

The pre-treatment S10C of this embodiment also executes an acid gas removal step S11C, the dehumidification step S12, and the regeneration step S13 as in the pre-treatment S10 of the first embodiment. However, the acid gas removal step 11C of this embodiment includes a primary acid gas removal step S11CA and a secondary acid gas removal step S11CB.

The primary acid gas removal step S11CA includes a first step S11CAa and a second step S11CAb. In the first step S11CAa, the exhaust gas is passed through the acid gas adsorbent 16 (first acid gas adsorbent) filled in the first acid gas adsorption tower 18a to remove the acid gas in the exhaust gas. In the second step S11CAb, the exhaust gas is passed through the acid gas adsorbent 16 (second acid gas adsorbent) filled in the second acid gas adsorption tower 18b to remove the acid gas in the exhaust gas.

In the secondary acid gas removal step S11CB, the acid gas adsorbent 16 in the dehumidification tower 11 removes the acid gas from the gas from the acid gas adsorption tower in which the primary acid gas removal step S11CA is executed in the first acid gas adsorbent container 13a and the second acid gas adsorbent container 13b.

In the dehumidification step S12, the moisture adsorbent 17 in the dehumidification tower 11 removes the moisture from the acid gas removal gas that is a gas from which the acid gas has been removed by the acid gas adsorbent 16 in the same dehumidification tower 11.

In the regeneration step S13 of this embodiment, the moisture adsorbent 17 filled in the dehumidification tower 11 is regenerated with the off-gas from the carbon dioxide collection device 50.

Furthermore, in this embodiment, the adsorbent replacement/switching step S30C of the pre-treatment device 10C is also executed. The replacement/switching step S30C is a treatment executed by the operator. The replacement/switching step S30C includes a determination step S31C and a replacement/switching step S32C.

In the determination step S31C, the operator determines whether or not the acid gas adsorbent 16 and the moisture adsorbent 17 satisfy a predetermined replacement/switching condition.

In the determination step S31C, for example, a part of the acid gas adsorbent 16 in the acid gas adsorption towers 18a and 18b and a part of the acid gas adsorbent 16 and a part of the moisture adsorbent 17 in the dehumidification tower 11 are sampled, and the sampled adsorbents are analyzed. If the analysis result indicates that the degree of deterioration of the sampled adsorbent is equal to or larger than a predetermined level, it is determined that the replacement/switching condition is satisfied.

Further, in the determination step S31C, it may be determined that the replacement condition or switching condition is satisfied when the period since the adsorbent was previously replaced is equal to or longer than a predetermined period without analyzing the adsorbent as described above. Further, in the determination step S31C, it may be determined that the replacement condition or switching condition is satisfied when the accumulated amount of gas that has passed through the replaced adsorbent since the adsorbent was previously replaced is equal to or larger than a predetermined amount.

When the operator determines that the replacement condition is satisfied, the adsorbent that satisfies the replacement condition is replaced with a new adsorbent. Further, when the operator determines that one acid gas adsorbent 16 in the acid gas adsorbent 16 filled in the first acid gas adsorption tower 18a and the acid gas adsorbent 16 filled in the second acid gas adsorption tower 18b satisfies the switching condition, the flow of the exhaust gas into one acid gas adsorbent 16 is stopped, and the acid gas is passed through the other acid gas adsorbent 16 (replacement/switching step S32B). For example, when the operator determines that the acid gas adsorbent 16 filled in the first acid gas adsorption tower 18a in the acid gas adsorbent 16 filled in the first acid gas adsorption tower 18a and the acid gas adsorbent 16 filled in the second acid gas adsorption tower 18b satisfied the switching condition, the first branch exhaust gas valve 42a is closed and the second branch exhaust gas valve 42b is opened in the replacement/switching step S32B.

Here, the operator closes the first branch exhaust gas valve 42a and opens the second branch exhaust gas valve 42b. However, the control device may close the first branch exhaust gas valve 42a and open the second branch exhaust gas valve 42b. In this case, the control device executes the determination step S31C, and the control device controls the opening and closing state of the first branch exhaust gas valve 42a and the second branch exhaust gas valve 42b according to the determination result of the determination step S31C.

As described above, even in this embodiment, since the exhaust gas can be passed through the acid gas adsorbent 16 and then through the moisture adsorbent 17 as in each of the above-described embodiments, it is possible to obtain the same effect as that of each of the above-described embodiments even in this embodiment.

Further, in this embodiment, when the switching condition is satisfied after the acid gas adsorbent 16 filled in one adsorption tower of the first acid gas adsorption tower 18a and the second acid gas adsorption tower 18b has deteriorated, the acid gas in the exhaust gas can be adsorbed by the acid gas adsorbent 16 filled in the other adsorption tower. Thus, even when the acid gas adsorbent 16 filled in one adsorption tower of the first acid gas adsorption tower 18a and the second acid gas adsorption tower 18b has deteriorated, the pre-treatment S10C of the pre-treatment device 10C can be continuously executed.

Although the embodiments of the present disclosure have been described in detail above, the present disclosure is not limited to the above embodiments. Various additions, modifications, substitutions, partial deletions, and the like are possible within the scope of the concept and spirit of the present disclosure derived from the contents defined in the claims and their equivalents.

### "Appendix"

The pre-treatment device of the above embodiments can be understood, for example, as below.

(1) The pre-treatment device of Aspect 1 is the pre-treatment devices 10, 10A, 10B, and 10C capable of removing moisture from an exhaust gas containing moisture, carbon dioxide, and an acid gas before treatment in the carbon dioxide collection device 50, including: the dehumidification towers 11, 11A, and 11B capable of removing moisture from the exhaust gas; and the blower 6 capable of sending the exhaust gas into the dehumidification towers 11, 11A, and 11B. The dehumidification towers 11, 11A, and 11B include the moisture adsorbent 17 capable of adsorbing moisture, the acid gas adsorbent 16 capable of adsorbing an acid gas, and the dehumidification containers 12, 12A, and 12B filled with the moisture adsorbent 17 and the acid gas adsorbent 16. The dehumidification containers 12, 12A, and 12B include the first port 12i into which the exhaust gas from the blower 6 is able to flow and the second port 12o from which a gas having passed through the moisture adsorbent 17 and the acid gas adsorbent 16 can flow out as a pretreated gas. The acid gas adsorbent 16 is filled on the side of the first port 12i in the dehumidification containers 12, 12A, and 12B, and the moisture adsorbent 17 is filled on the side of the second port 12o rather than the acid gas adsorbent 16 in the dehumidification containers 12, 12A, and 12B. The moisture adsorbent 17 is an adsorbent containing alumina. The acid gas adsorbent 16 is an adsorbent containing silica and not containing alumina or an adsorbent containing silica and alumina and having a (Si/Al) molar ratio of more than 2.5.

Representative moisture adsorbents include zeolite and silica gel. Silica gel is resistant to acid gas. Therefore, even if silica gel is used as an adsorbent for adsorbing moisture from exhaust gas containing moisture and acid gas, the dehumidification performance of the silica gel is not significantly reduced. On the other hand, when an adsorbent containing alumina such as zeolite is used as an adsorbent for adsorbing moisture from the exhaust gas containing moisture and acid gas, the alumina binds with the acid gas, and the dehumidification performance of the adsorbent decreases. That is, an adsorbent containing alumina has lower resistance to acid gas than silica gel. As described above, from the viewpoint of resistance to acid gas, an adsorbent having a high silica content relative to the alumina content is preferred.

On the other hand, adsorbents containing alumina such as zeolite can lower the dew point of the exhaust gas compared to silica gel. In other words, the adsorbent containing alumina can reduce the moisture concentration in exhaust gas compared to silica gel. As described above, from the viewpoint of lowering the dew point of the gas, an adsorbent having a relatively high alumina content relative to the silica content is preferable.

In this aspect, from the viewpoint of lowering the dew point of the gas sent to the carbon dioxide collection device 50, the adsorbent containing alumina is used as the moisture adsorbent 17.

However, since the moisture adsorbent 17 containing alumina has low resistance to acid gas, in this embodiment, the exhaust gas is passed through the acid gas adsorbent 16 to remove most of the acid gas in the exhaust gas, and then the gas is passed through the moisture adsorbent 17. Therefore, the acid gas adsorbent 16 plays a role of protecting the moisture adsorbent 17 used in this aspect by adsorbing acid gas.

As described above, in this aspect, since the adsorbent containing alumina is used as the moisture adsorbent 17, it is possible to lower the dew point of the gas sent to the carbon dioxide collection device 50. As described above, the adsorbent containing alumina has low resistance to acid gas. However, in this aspect, since the exhaust gas is passed through the acid gas adsorbent 16 to remove most of the acid gas in the exhaust gas and this gas is passed through the moisture adsorbent 17 as described above, the moisture adsorption performance of the moisture adsorbent 17 can be maintained for a long period of time.

(2) The pre-treatment device of Aspect 2 is the pre-treatment devices 10A and 10B of Aspect 1, wherein the dehumidification containers 12A and 12B include the acid gas adsorbent containers 13, 13a, and 13b filled with the acid gas adsorbent 16 and the moisture adsorbent container 15 filled with the moisture adsorbent 17. The acid gas adsorbent containers 13, 13a, and 13b include the first port 13i into which the exhaust gas from the blower 6 is able to flow and the second port 13o from which a gas having passed through the acid gas adsorbent 16 is able to flow out as an acid gas removal gas. The moisture adsorbent container 15 includes the first port 15i into which the acid gas removal gas is able to flow and the second port 15o from which a gas having passed through the moisture adsorbent 17 is able to flow out. The first port 13i of the acid gas adsorbent container 13 is the first port 12i of the dehumidification containers 12A and 12B. The second port 15o of the moisture adsorbent container 15 is the second port 12o of the dehumidification containers 12A and 12B.

(3) The pre-treatment device of Aspect 3 is the pre-treatment device 10B of Aspect 2, further including the switching mechanism 29B. The acid gas adsorbent containers 13a and 13b include the first acid gas adsorbent container 13a filled with the acid gas adsorbent 16 and the second acid gas adsorbent container 13b filled with the acid gas adsorbent 16. Each of the first acid gas adsorbent container 13a and the second acid gas adsorbent container 13b includes the first port 12i functioning as the first port 12i of the acid gas adsorbent containers 13a and 13b and the second port 12o functioning as the second port 12o of the acid gas adsorbent containers 13a and 13b. The switching mechanism 29B is configured to be able to switch a first state in which the exhaust gas from the blower 6 is guided to the first port 13i of the first acid gas adsorbent container 13a and a second state in which the exhaust gas from the blower 6 is guided to the first port 13i of the second acid gas adsorbent container 13b. The gas flowing out from the second port 13o of the first acid gas adsorbent container 13a and the gas flowing out from the second port 13o of the second acid gas adsorbent container 13b are configured to be able to flow from the first port 15i of the moisture adsorbent container 15 into the moisture adsorbent container 15.

In this aspect, when the acid gas adsorbent 16 filled in one container of the first acid gas adsorbent container 13a and the second acid gas adsorbent container 13b has deteriorated, the acid gas in the exhaust gas can be adsorbed by the acid gas adsorbent 16 filled in the other container. Thus, even when the acid gas adsorbent 16 filled in one container of the first acid gas adsorbent container 13a and the second acid gas adsorbent container 13b has deteriorated, the pre-treatment S10B of the pre-treatment device 10B can be continuously executed.

(4) The pre-treatment device of Aspect 4 is the pre-treatment device 10C of Aspect 1, further including: the first acid gas adsorption tower 18a; the second acid gas adsorption tower 18b; and the switching mechanism 29C. Each of the first acid gas adsorption tower 18a and the second acid gas adsorption tower 18b includes the acid gas adsorbent 16 capable of adsorbing an acid gas and the container 19 filled with the acid gas adsorbent 16. Each of the container 19 of the first acid gas adsorption tower 18a and the container 19 of the second acid gas adsorption tower 18b includes the first port 19i into which the exhaust gas from the blower 6 is able to flow and the second port 19o from which a gas having passed through the acid gas adsorbent 16 is able to flow out. The switching mechanism 29C is configured to be able to switch a first state in which the exhaust gas from the blower 6 is guided to the first port 19i of the first acid gas adsorption tower 18a and a second state in which the exhaust gas from the blower 6 is guided to the first port 19i of the second acid gas adsorption tower 18b. The gas flowing out from the second port 19o of the first acid gas adsorption tower 18a and the gas flowing out from the second port 19o of the second acid gas adsorption tower 18b are configured to be able to flow from the first port 12i of the dehumidification tower 11 into the dehumidification tower 11.

In this aspect, when the acid gas adsorbent 16 filled in one adsorption tower of the first acid gas adsorption tower 18a and the second acid gas adsorption tower 18b has deteriorated, the acid gas in the exhaust gas can be adsorbed by the acid gas adsorbent 16 filled in the other adsorption tower. Thus, even when the acid gas adsorbent 16 filled in one adsorption tower of the first acid gas adsorption tower 18a and the second acid gas adsorption tower 18b has deteriorated, the pre-treatment S10C of the pre-treatment device 10C can be continuously executed.

(5) The pre-treatment device of Aspect 5 is the pre-treatment devices 10, 10A, 10B, and 10C of any one of Aspects 1 to 4, wherein the moisture adsorbent 17 is activated alumina or zeolite.

(6) The pre-treatment device of Aspect 6 is the pre-treatment devices 10, 10A, 10B, and 10C of any one of Aspects 1 to 4, wherein the moisture adsorbent 17 is zeolite having a (Si/Al) molar ratio of less than 2.5.

(7) The pre-treatment device of Aspect 7 is the pre-treatment devices 10, 10A, 10B, and 10C of any one of Aspects 1 to 6, wherein the acid gas adsorbent 16 is silica gel or high-silica zeolite.

The carbon dioxide collection facility of the above embodiments can be understood, for example, as below.

(8) The carbon dioxide collection facility of Aspect 8 includes the pre-treatment devices 10, 10A, 10B, and 10C of any one of Aspects 1 to 7 and the carbon dioxide collection device 50. The carbon dioxide collection device 50 includes the carbon dioxide adsorption tower 51 into which the pretreated gas is able to flow and which is filled with the carbon dioxide adsorbent 53 capable of adsorbing carbon dioxide in the pretreated gas and the suction machine 55 which vacuum-suctions the inside of the carbon dioxide adsorption tower 51.

In the pre-treatment devices 10, 10A, 10B, and 10C of this aspect, the dew point of the gas sent to the carbon dioxide collection device 50 can be lowered. In other words, the moisture concentration in the gas can be reduced. Therefore, carbon dioxide can be efficiently adsorbed by the carbon dioxide adsorbent 53 in the carbon dioxide adsorption tower 51. Carbon dioxide adsorbed by the carbon dioxide adsorbent 53 is collected by vacuum-suctioning the inside of the carbon dioxide adsorption tower 51 by the suction machine 55.

The pre-treatment method of the above embodiments can be understood, for example, as below.

(9) The pre-treatment method of Aspect 9 is a pre-treatment method of removing moisture from an exhaust gas containing moisture, carbon dioxide, and an acid gas before the carbon dioxide collection treatment S20, executing: the acid gas removal steps S11, S11B, and S11C of removing an acid gas in the exhaust gas by passing the exhaust gas through the acid gas adsorbent 16 capable of adsorbing the acid gas; and the dehumidification step S12 of passing an acid gas removal gas that is the exhaust gas subjected to the acid gas removal steps S11, S11B, and S11C through the moisture adsorbent 17 capable of adsorbing the moisture to remove the moisture in the acid gas removal gas and executing the carbon dioxide collection treatment S20 on the pretreated gas that is the acid gas removal gas from which the moisture has been removed. The acid gas adsorbent 16 is an adsorbent containing silica and not containing alumina or an adsorbent containing silica and alumina and having a (Si/Al) molar ratio of more than 2.5. The moisture adsorbent 17 is an adsorbent containing alumina.

In this aspect, as in the pre-treatment devices 10, 10A, 10B, and 10C of Aspect 1, the dew point of the gas subjected to the carbon dioxide collection treatment S20 can be lowered and the moisture adsorption performance of the moisture adsorbent 17 used in the pre-treatments S10, S10B, and S10C can be maintained for a long period of time.

(10) The pre-treatment method of Aspect 10 is the pre-treatment method of Aspect 9, wherein the acid gas removal step S11B includes the first step SllBa of passing the exhaust gas through the first acid gas adsorbent 16 capable of adsorbing the acid gas to remove the acid gas in the exhaust gas and the second step S11Bb of passing the exhaust gas through the second acid gas adsorbent 16 capable of adsorbing the acid gas to remove the acid gas in the exhaust gas. The pre-treatment method further executes: the determination step S31B of determining whether or not any one acid adsorbent of the first acid gas adsorbent 16 and the second acid gas adsorbent 16 has deteriorated; and the switching step 32B of ending one of the first step S11Ba and the second step S11Bb in which the exhaust gas is passed through the one acid gas adsorbent 16 and executing the other step when it is determined that the one acid gas adsorbent 16 has deteriorated in the determination step S31B.

In this aspect, when one acid gas adsorbent 16 of the first acid gas adsorbent 16 and the second acid gas adsorbent 16 has deteriorated, the acid gas of the exhaust gas can be adsorbed by the other acid gas adsorbent 16, and hence the pre-treatment S10B can be continuously executed.

(11) The pre-treatment method of Aspect 11 is the pre-treatment method of Aspect 9 or 10, further executing: the determination steps S31, S31B, and S32C of determining whether or not the acid gas adsorbent 16 has deteriorated; and the replacement steps S32, S32B, and S32C of replacing the acid gas adsorbent 16 with a new acid gas adsorbent 16 when it is determined that the acid gas adsorbent 16 has deteriorated in the determination steps S31, S31B, and S31C.

(12) The pre-treatment method of Aspect 12 is the pre-treatment method of any one of Aspects 9 to 11, wherein the moisture adsorbent 17 is activated alumina or zeolite.

(13) The pre-treatment method of Aspect 13 is the pre-treatment method of any one of Aspects 9 to 11, wherein the moisture adsorbent 17 is zeolite having a (Si/Al) molar ratio of less than 2.5.

(14) The pre-treatment method of Aspect 14 is the pre-treatment method of any one of Aspects 9 to 13, wherein the acid gas adsorbent 16 is silica gel or high-silica zeolite.

The carbon dioxide collection method of the above embodiments can be understood, for example, as below.

(15) The carbon dioxide collection method of Aspect 15 executes the pre-treatment method of any one of Aspects 9 to 14 and executes the carbon dioxide collection treatment S20. The carbon dioxide collection treatment S20 includes the carbon dioxide adsorption step S21 of passing the pretreated gas through the carbon dioxide adsorbent 53 capable of adsorbing carbon dioxide so that the carbon dioxide in the pretreated gas is adsorbed by the carbon dioxide adsorbent 53 and the carbon dioxide release step S22 of releasing the carbon dioxide from the carbon dioxide adsorbent 53 to collect the carbon dioxide.

In this aspect, the dew point of the gas subjected to the carbon dioxide collection treatment S20 can be lowered. In other words, the moisture concentration in the gas can be reduced. Therefore, carbon dioxide can be efficiently adsorbed by the carbon dioxide adsorbent 53 used in the carbon dioxide adsorption step S21.

Carbon dioxide adsorbed by the carbon dioxide adsorbent 53 is collected by executing the carbon dioxide release step S22.

### INDUSTRIAL APPLICABILITY

According to an aspect of the present disclosure, it is possible to lower the dew point of the gas having passed through the moisture adsorbent while maintaining the moisture adsorption performance of the moisture adsorbent for a long period of time.

### REFERENCE SIGNS LIST

1: Exhaust gas generation source
6: Blower
7: Dehumidification vacuum pump
10, 10A, 10B, 10C: Pre-treatment device
11, 11A, 11B: Dehumidification tower
11a, 11Aa, 11 B a: First dehumidification tower
11b, 11Ab, 11Bb: Second dehumidification tower
12, 12A, 12B: Dehumidification container 12i: First port
12o: Second port
13: Acid gas adsorbent container
13a: First acid gas adsorbent container
13b: Second acid gas adsorbent container
13i: First port
13o: Second port
15: Moisture adsorbent container
15i: First port
15o: Second port
16: Acid gas adsorbent
17: Moisture adsorbent
18a: First acid gas adsorption tower
18b: Second acid gas adsorption tower
19: Container
19i: First port
19o: Second port
20, 20B, 20C: Exhaust gas line
21: Main exhaust gas line
22a, 22Ba, 22Ca: First exhaust gas line
22b, 22Bb, 22Cb: Second exhaust gas line
23a, 23aa, 23ab: First branch exhaust gas line
23b, 23ba, 23bb: Second branch exhaust gas line
24a: First primary treated gas line
24b: Second primary treated gas line
25: Gas line junction
26a: First acid gas removal gas line
26aa: First a acid gas removal gas line
26ab: First b acid gas removal gas line
26b: Second acid gas removal gas line
26ba: Second a acid gas removal gas line
26bb: Second b acid gas removal gas line
29B, 29C: Switching mechanism
30: Pretreated gas line
31a: Dehumidification-side first pretreated gas line
31b: Dehumidification-side second pretreated gas line
32: Main pretreated gas line
33a: Collection-side first pretreated gas line
33b: Collection-side second pretreated gas line
33c: Collection-side third pretreated gas line
34: Moisture-rich gas line
35a: First moisture-rich gas line
35b: Second moisture-rich gas line
36: Main moisture-rich gas line
37: Off-gas line
38a: Collection-side first off-gas line
38b: Collection-side second off-gas line
38c: Collection-side third off-gas line
38m: Main off-gas line
39a: Dehumidification-side first off-gas line
39b: Dehumidification-side second off-gas line
41a: First exhaust gas valve
41b: Second exhaust gas valve
42a, 42aa, 42ab: First branch exhaust gas valve
42b, 42ba, 42bb: Second branch exhaust gas valve
43a: Dehumidification-side first pretreated gas valve
43b: Dehumidification-side second pretreated gas valve
44a: First moisture-rich gas valve
44b: Second moisture-rich gas valve
45a: Dehumidification-side first off-gas valve
45b: Dehumidification-side second off-gas valve
50: Carbon dioxide collection device
51: Carbon dioxide adsorption tower
51a: First carbon dioxide adsorption tower
51b: Second carbon dioxide adsorption tower
51c: Third carbon dioxide adsorption tower
52: Container
52i: First port
52o: Second port
53: Carbon dioxide adsorbent
55: Suction machine
56a: Collection-side first preheated gas valve
56b: Collection-side second preheated gas valve
56c: Collection-side third preheated gas valve
57a: First suction valve
57b: Second suction valve
57c: Third suction valve
58a: Collection-side first off-gas valve
58b: Collection-side second off-gas valve
58c: Collection-side third off-gas valve
63: Collection tank
65: Suction line
66a: First suction line
66b: Second suction line
66c: Third suction line
67: Main suction line
68: Discharge line

## Claims

1. A pre-treatment device capable of removing moisture from an exhaust gas containing moisture, carbon dioxide, and an acid gas before treatment in a carbon dioxide collection device, comprising:
a dehumidification tower capable of removing moisture from the exhaust gas; and
a blower capable of sending the exhaust gas into the dehumidification tower,
wherein the dehumidification tower includes a moisture adsorbent capable of adsorbing moisture, an acid gas adsorbent capable of adsorbing an acid gas, and a dehumidification container filled with the moisture adsorbent and the acid gas adsorbent,
wherein the dehumidification container includes a first port into which the exhaust gas from the blower is able to flow and a second port from which a gas having passed through the moisture adsorbent and the acid gas adsorbent is able to flow out as a pretreated gas,
wherein the acid gas adsorbent is filled on the side of the first port in the dehumidification container, and the moisture adsorbent is filled on the side of the second port rather than the acid gas adsorbent in the dehumidification container,
wherein the moisture adsorbent is an adsorbent containing alumina, and
wherein the acid gas adsorbent is an adsorbent containing silica and not containing alumina or an adsorbent containing silica and alumina and having a (Si/Al) molar ratio of more than 2.5.

2. The pre-treatment device according to claim 1,
wherein the dehumidification container includes an acid gas adsorbent container filled with the acid gas adsorbent and a moisture adsorbent container filled with the moisture adsorbent,
wherein the acid gas adsorbent container includes a first port into which the exhaust gas from the blower is able to flow and a second port from which a gas having passed through the acid gas adsorbent is able to flow out as an acid gas removal gas,
wherein the moisture adsorbent container includes a first port into which the acid gas removal gas is able to flow and a second port from which a gas having passed through the moisture adsorbent is able to flow out,
wherein the first port of the acid gas adsorbent container is the first port of the dehumidification container, and
wherein the second port of the moisture adsorbent container is the second port of the dehumidification container.

3. The pre-treatment device according to claim 2, further comprising:
a switching mechanism,
wherein the acid gas adsorbent container includes a first acid gas adsorbent container filled with the acid gas adsorbent and a second acid gas adsorbent container filled with the acid gas adsorbent,
wherein each of the first acid gas adsorbent container and the second acid gas adsorbent container includes a first port functioning as the first port of the acid gas adsorbent container and a second port functioning as the second port of the acid gas adsorbent container,
wherein the switching mechanism is able to switch a first state in which the exhaust gas from the blower is guided to the first port of the first acid gas adsorbent container and a second state in which the exhaust gas from the blower is guided to the first port of the second acid gas adsorbent container, and
wherein a gas flowing out from the second port of the first acid gas adsorbent container and a gas flowing out from the second port of the second acid gas adsorbent container are configured to be able to flow from the first port of the moisture adsorbent container into the moisture adsorbent container.

4. The pre-treatment device according to claim 1, further comprising:
a first acid gas adsorption tower;
a second acid gas adsorption tower; and
a switching mechanism,
wherein each of the first acid gas adsorption tower and the second acid gas adsorption tower includes an acid gas adsorbent capable of adsorbing an acid gas and a container filled with the acid gas adsorbent,
wherein each of the container of the first acid gas adsorption tower and the container of the second acid gas adsorption tower includes a first port into which the exhaust gas from the blower is able to flow and a second port from which a gas having passed through the acid gas adsorbent is able to flow out,
wherein the switching mechanism is able to switch a first state in which the exhaust gas from the blower is guided to the first port of the first acid gas adsorption tower and a second state in which the exhaust gas from the blower is guided to the first port of the second acid gas adsorption tower, and
wherein a gas having flowed out from the second port of the first acid gas adsorption tower and a gas having flowed out from the second port of the second acid gas adsorption tower are configured to be able to flow from the first port of the dehumidification tower into the dehumidification tower.

5. The pre-treatment device according to any one of claims 1 to 4,
wherein the moisture adsorbent is activated alumina or zeolite.

6. The pre-treatment device according to any one of claims 1 to 4,
wherein the moisture adsorbent is zeolite having a (Si/Al) molar ratio of less than 2.5.

7. The pre-treatment device according to any one of claims 1 to 6,
wherein the acid gas adsorbent is silica gel or high-silica zeolite.

8. A carbon dioxide collection facility comprising:
the pre-treatment device according to any one of claims 1 to 7;
the carbon dioxide collection device,
wherein the carbon dioxide collection device includes a carbon dioxide adsorption tower into which the pretreated gas is able to flow and which is filled with a carbon dioxide adsorbent capable of adsorbing carbon dioxide in the pretreated gas and a suction machine which vacuum-suctions the inside of the carbon dioxide adsorption tower.

9. A pre-treatment method of removing moisture from an exhaust gas containing moisture, carbon dioxide, and an acid gas before carbon dioxide collection treatment, executing:
an acid gas removal step of removing an acid gas in the exhaust gas by passing the exhaust gas through an acid gas adsorbent capable of adsorbing an acid gas; and
a dehumidification step of passing an acid gas removal gas that is the exhaust gas subjected to the acid gas removal step through a moisture adsorbent capable of adsorbing moisture to remove moisture in the acid gas removal gas and executing the carbon dioxide collection treatment on a pretreated gas that is the acid gas removal gas from which the moisture has been removed,
wherein the acid gas adsorbent is an adsorbent containing silica and not containing alumina or an adsorbent containing silica and alumina and having a (Si/Al) molar ratio of more than 2.5, and
wherein the moisture adsorbent is an adsorbent containing alumina.

10. The pre-treatment method according to claim 9,
wherein the acid gas removal step includes a first step of passing the exhaust gas through a first acid gas adsorbent capable of adsorbing an acid gas to remove an acid gas in the exhaust gas and a second step of passing the exhaust gas through a second acid gas adsorbent capable of adsorbing an acid gas to remove an acid gas in the exhaust gas, and
wherein the pre-treatment method further executes:
a determination step of determining whether or not any one acid adsorbent of the first acid gas adsorbent and the second acid gas adsorbent has deteriorated; and
a switching step of ending one of the first and second steps in which the exhaust gas is passed through the one acid gas adsorbent and executing the other step when it is determined that the one acid gas adsorbent has deteriorated in the determination step.

11. The pre-treatment method according to claim 9 or 10, further executing:
a determination step of determining whether or not the acid gas adsorbent has deteriorated; and
a replacement step of replacing the acid gas adsorbent with a new acid gas adsorbent when it is determined that the acid gas adsorbent has deteriorated in the determination step.

12. The pre-treatment method according to any one of claims 9 to 11,
wherein the moisture adsorbent is activated alumina or zeolite.

13. The pre-treatment method according to any one of claims 9 to 11,
wherein the moisture adsorbent is zeolite having a (Si/Al) molar ratio of less than 2.5.

14. The pre-treatment method according to any one of claims 9 to 13,
wherein the acid gas adsorbent is silica gel or high-silica zeolite.

15. A carbon dioxide collection method of executing:
the pre-treatment method according to any one of claims 9 to 14; and
the carbon dioxide collection treatment,
wherein the carbon dioxide collection treatment includes a carbon dioxide adsorption step of passing the pretreated gas through a carbon dioxide adsorbent capable of adsorbing carbon dioxide so that the carbon dioxide in the pretreated gas is adsorbed by the carbon dioxide adsorbent and a carbon dioxide release step of releasing the carbon dioxide from the carbon dioxide adsorbent to collect the carbon dioxide.
